(19) Europäisches Patentamt
European Patent Office
Office européen des brevets

(11) **EP 2 792 585 B1**

(12) **EUROPEAN PATENT SPECIFICATION**

(45) Date of publication and mention
of the grant of the patent:
**08.05.2019   Bulletin 2019/19**

(51) Int Cl.:
*B62J 6/02* *(2006.01)*          *B60Q 1/08* *(2006.01)*
*B60Q 1/00* *(2006.01)*         *B60Q 1/12* *(2006.01)*
*B60Q 1/18* *(2006.01)*         *B60Q 1/068* *(2006.01)*
*F21S 45/47* *(2018.01)*        *F21S 45/48* *(2018.01)*

(21) Application number: **14162363.7**

(22) Date of filing: **28.03.2014**

(54) **Light unit for use in vehicle that leans into turns, method for adjusting the same, vehicle that leans into turns, and method for adjusting the same**

Lichteinheit zur Verwendung in einem Fahrzeug, das sich in Kurven neigt, Verfahren zur Einstellung davon, Fahrzeug, Fahrzeug, das sich in Kurven neigt, und Verfahren zur Einstellung davon

Unité de lumière destinée à être utilisée dans un véhicule qui penche dans les virages, procédé de réglage de ce dernier, véhicule qui penche dans les virages et procédé de réglage de ce dernier

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **17.04.2013   JP 2013086298**

(43) Date of publication of application:
**22.10.2014   Bulletin 2014/43**

(73) Proprietor: **Yamaha Hatsudoki Kabushiki Kaisha Iwata-shi, Shizuoka 438-8501 (JP)**

(72) Inventors:
• **Kosugi, Makoto**
  **Iwata-shi, Shizuoka 438-8501 (JP)**
• **Ikeda, Takeshi**
  **Iwata-shi, Shizuoka 438-8501 (JP)**
• **Kino, Yasuhiko**
  **Iwata-shi, Shizuoka 438-8501 (JP)**
• **Inoue, Takehiro**
  **Iwata-shi, Shizuoka 438-8501 (JP)**
• **Ooba, Junichi**
  **Iwata-shi, Shizuoka 438-8501 (JP)**

(74) Representative: **Grünecker Patent- und Rechtsanwälte PartG mbB Leopoldstraße 4 80802 München (DE)**

(56) References cited:
**EP-A1- 1 920 971          EP-A1- 1 970 618
EP-A1- 2 489 549          WO-A1-2010/061651
DE-B3-102004 008 236     JP-A- 2008 001 305
US-A1- 2009 154 190       US-A1- 2009 207 626**

EP 2 792 585 B1

**Description**

The present invention relates to a light unit, a light unit adjustment method, and a method for adjusting a vehicle.

In general, in a vehicle that leans into turns (such as saddle-ride type vehicles including motorcycles, three-wheeled motor vehicles, snowmobiles, and ATVs (all terrain vehicles)), when the vehicle corners or turns at an intersection, a rider operates a handlebar and additionally shifts his/her own weight in order to counteract centrifugal force acting on a vehicle body. As a result, the vehicle turns with an attitude (hereinafter, also referred to as "lean attitude") leaning to the inner side of a curve. On the other hand, in a vehicle that does not lean into turns, for example, in an automobile, when the vehicle corners or turns at an intersection, a driver operates a steering wheel and turns with centrifugal force acting on a vehicle body. Therefore, in the vehicle that does not lean into turns, the vehicle body leans to the outer side of a curve due to the centrifugal force.

In the vehicle that leans into turns, the turning is made with an active use of the weight shifting of the rider himself/herself. Therefore, the vehicle body leans to a high degree. In the vehicle that does not lean into turns, the vehicle body leans to the outer side of the curve due to the centrifugal force. The degree of this leaning varies depending on the running speed of the vehicle and the magnitude (radius) of the curve, and this leaning of the vehicle body is not utilized for the turning. In the vehicle that does not lean into turns, it is preferable that the amount of leaning to the outer side of the curve due to the centrifugal force is small.

Thus, at a time of cornering or turning at an intersection, the vehicle that leans into turns causes the vehicle body to lean to the inner side of the curve with a relatively large amount of leaning, while the vehicle that does not lean into turns causes the vehicle body to lean to the outer side of the curve with a relatively small amount of leaning.

Normally, a vehicle is provided with a plurality of lights irrespective of whether or not the vehicle leans into turns. The lights include a light intended mainly to ensure a field of view of a rider of the vehicle and a light intended mainly to enable a surrounding vehicle or the like to recognize the presence of the own vehicle. A headlight is the light intended mainly to ensure the field of view of the rider of the vehicle, and in general, is configured to switch between a high-beam headlight and a low-beam headlight.

The high-beam headlight is also called a running headlight. The high-beam headlight is able to ensure a field of view at a long distance. However, in order to avoid dazzling a rider of a surrounding vehicle or the like, the high-beam headlight is generally used in a situation where there is no vehicle or the like existing ahead at night. The low-beam headlight is also called a passing headlight. The low-beam headlight produces a cut-off line at the upper side of emitted light, and thereby suppresses dazzling to an oncoming vehicle or the like while the own vehicle is running with an upright attitude, and additionally ensures the visibility over a road surface at a long distance. The cut-off line of light emitted from the low-beam headlight serves as a line (bright-dark limit) that defines the upper limit of the light emitted from the low-beam headlight relative to light emitted from a light source. Therefore, when there is a cut-off line, the brightness largely changes at the cut-off line as a boundary.

When a vehicle that leans into turns is running on a straight road, the cut-off line of the light emitted from the low-beam headlight extends horizontally. When the vehicle that leans into turns is running on a curve; as the lean angle of the vehicle increases, the low-beam headlight illuminates a nearer position on a running lane. Thus, the cut-off line of the light emitted from the low-beam headlight is largely inclined from a horizontal line. As a result, an illumination range in an area inside the curve and ahead in an advancing direction decreases.

Conventionally, therefore, a vehicle has been proposed that includes a sub headlight configured to emit light to the upper side of a low beam light in accordance with a cornering signal indicating that the vehicle is running on a curve (see JP 4864562). In JP 4864562, while the vehicle takes a lean attitude when running on a curve, the sub headlight is able to emit light to the inner side of the curve to thereby keep ensuring the visibility over a road surface at a long distance. Particularly, the sub headlight of JP 4864562 is turned on in accordance with the cornering signal indicating that the vehicle is running on a curve. Setting an illumination range of the sub headlight such that the illumination range of the sub headlight compensates for a decrease in an illumination range of a low-beam headlight caused by inclination of the vehicle can maintain the visibility over a road surface at a long distance.

In JP 4864562, in addition to the cut-off line of the light emitted from the low-beam headlight, a cut-off line of light emitted from the sub headlight is also produced. Thereby, JP 4864562 achieves both suppression of dazzling to an oncoming vehicle or the like and suppression of decrease in the visibility over a road surface at a long distance while the vehicle is running on a curve.

In JP 4864562, in order to achieve both suppression of dazzling to an oncoming vehicle or the like and suppression of decrease in the visibility over a road surface at a long distance, it is necessary to properly set the positional relationship of the cut-off line of the light emitted from the low-beam headlight and the cut-off line of the light emitted from the sub headlight relative to each other.

For this purpose, in JP 4864562, the low-beam headlight that produces the cut-off line and the sub headlight that produces the cut-off line are provided in a single lamp body. In this manner, the correctness of the positional relationship of the cut-off line of the light emitted from the low-beam headlight and the cut-off line of the light emitted from the sub headlight relative to each other is ensured.

In JP 4864562, however, a plurality of sub headlights that produce separate and different cut-off lines are required. These sub headlights and the low-beam headlight are integrated as one piece. Therefore, a light unit has a relatively large size. This results in a high likelihood of occurrence of a dimensional error, and it is not easy to manufacture a light unit that satisfies a demanded accuracy of the positional relationship between the cut-off lines.

Further prior art is known from documents EP 24 89 549 A1 and WO 2010/061651 A1.

The present invention is accomplished in view of the problems described above. An object of the present invention is to provide a light unit for use in a vehicle that leans into turns, that is easy to manufacture and that achieves both suppression of dazzling to an oncoming vehicle or the like and suppression of decrease in the visibility over a road surface at a long distance even while the vehicle that leans into turns is running on a curve.

According to the present invention said object is solved by a vehicle with a light unit having the features of independent claim 1. Preferred embodiments are laid down in the dependent claims.

The present invention also provides a method for adjusting the light unit, and a method for adjusting the vehicle that leans into turns.

To solve the problems described above, the present teaching adopts the following configurations.

(1) A light unit for use in a vehicle that leans into turns, the light unit including: a fixed part fixed to a vehicle body that is allowed to lean while the vehicle is running; a sub headlight provided in the fixed part and including a sub headlight light source, the sub headlight being configured to produce a cut-off line at the upper side of light emitted from the sub headlight light source, the cut-off line extending obliquely when the vehicle body is upright, the sub headlight being configured to be turned on in accordance with a lean angle of the vehicle while the vehicle is running; a sub headlight turn-on device for a vehicle's stopped state configured to turn on the sub headlight when the vehicle is stopped; and a sub-headlight cut-off line moving device configured to, when the vehicle is stopped, move the cut-off line of the light emitted from the sub headlight under a state where the sub headlight is turned on and the fixed part is fixed to the vehicle body.

In the configuration of (1), the sub headlight can be turned on under a state where the light unit is fixed when the vehicle is stopped, so that the cut-off line of the light emitted from the sub headlight can be finely adjusted. Therefore, a lowered accuracy is demanded in manufacturing. This can provide a light unit that is easy to manufacture and that achieves both suppression of dazzling to an oncoming vehicle or the like and suppression of decrease in the visibility over a road surface at a long distance even while the vehicle that leans into turns is running on a curve.

In the configuration of (1), by fixing the fixed part in a predetermined position, the light emitted from the sub headlight can be finely adjusted even in the light unit alone.

(2) The light unit according to (1), wherein the light unit includes a main headlight, the main headlight being supported on the vehicle body that is allowed to lean while the vehicle is running, the main headlight being configured to be turned on irrespective of the lean angle of the vehicle while the vehicle is running, the sub headlight turn-on device for a vehicle's stopped state is able to turn on the sub headlight under a state where the main headlight is turned on when the vehicle is stopped.

In the configuration of (2), the sub headlight can be turned on under a state where the main headlight is turned on. This makes it easy to finely adjust the light emitted from the sub headlight based on the light emitted from the main headlight as a reference.

(3) The light unit according to (2), wherein the main headlight includes a low-beam headlight, the low-beam headlight including a low-beam headlight light source, the low-beam headlight being configured to produce a cut-off line at the upper side of light emitted from the low-beam headlight light source, the cut-off line extending in a width direction of the vehicle when the vehicle body is upright.

In the configuration of (3), the sub headlight can be turned on under a state where the low-beam headlight is turned on. This makes it easy to finely adjust the light emitted from the sub headlight based on the cut-off line of the light emitted from the low-beam headlight as a reference.

(4) The light unit according to (2) or (3), wherein the main headlight includes a high-beam headlight, the high-beam headlight being configured such that light emitted from the high-beam headlight when the vehicle body is upright is narrower than light emitted from the sub headlight with respect to a width direction of the vehicle.

In the configuration of (4), the sub headlight can be turned on under a state where the high-beam headlight is turned on. Since the light emitted from the high-beam headlight is narrower than the light emitted from the sub headlight with respect to the width direction of the vehicle, the light emitted from the high-beam headlight is more convenient as a positioning reference than the light emitted from the sub headlight. Thus, the fine adjustment of the light emitted from the sub headlight can be performed more easily.

(5) A light unit adjustment method for adjusting the light unit according to (3) or (4), the adjustment method including the step of adjusting the light emitted from the sub headlight based on the cut-off line of the light emitted from the low-beam headlight as a reference.

In the configuration of (5), the fine adjustment of the light emitted from the sub headlight can be easily performed based on the cut-off line of the light emitted from the low-beam headlight as a reference.

(6) The adjustment method according to (5), including: a first step in which light emitted from the sub headlight whose orientation changes together with the low-beam headlight is adjusted based on the cut-off line of the light emitted from the low-beam headlight as a reference, the first step being performed on the light unit when the vehicle is upright; and a second step in which light emitted from the sub headlight whose orientation changes independently of the sub headlight having been adjusted in the first step is adjusted based on the light emitted from the sub headlight having been adjusted in the first step as a reference, the second step being performed on the light unit when the vehicle is upright.

In the configuration of (6), the light emitted from part of sub headlights is adjusted based on the cut-off line of the light emitted from the low-beam headlight as a reference, and the light emitted from another part of the sub headlights is adjusted based on the light emitted from the sub headlight after adjustment as a reference. This makes it relatively easy to finely adjust the light emitted from the sub headlight. Additionally, it is possible to adopt a light unit configured such that the light emitted from part of the sub headlights and the light emitted from another part of the sub headlights can be adjusted independently of each other. Such a configuration enables the fine adjustment of the light emitted from the sub headlight to be performed easily, with lowering of the demand for the dimensional accuracy in manufacturing.

(7) The adjustment method according to (5), including: a vertical adjustment step in which the position of light emitted from the sub headlight whose orientation changes together with the low-beam headlight is adjusted with respect to the vertical direction based on the cut-off line of the light emitted from the low-beam headlight as a reference, the vertical adjustment step being performed on the light unit when the vehicle is upright; and a widthwise adjustment step in which, under a state where the light unit is inclined such that the cut-off line of the light emitted from the sub headlight becomes substantially horizontal, the position of the light emitted from the sub headlight whose orientation changes together with the low-beam headlight is adjusted with respect to the width direction of the vehicle based on the cut-off line of the light emitted from the sub headlight as a reference.

In the configuration of (7), the light emitted from the sub headlight can be easily adjusted based on the cut-off lines of the low-beam headlight and the sub headlight as a reference. Moreover, the adjustment of the light emitted from the sub headlight is performed under a state where the light unit is inclined such that the cut-off line becomes substantially horizontal. Thus, the light emitted from the sub headlight obtained when the vehicle body is actually inclined is attained. Therefore, the accuracy of the adjustment can be increased.

(8) A vehicle that leans into turns, the vehicle including the light unit according to any one of (1) to (4).

The configuration of (8) achieves both suppression of dazzling to an oncoming vehicle or the like and suppression of decrease in the visibility over a road surface at a long distance even while the vehicle that leans into turns is running on a curve.

(9) A method for adjusting a vehicle that leans into turns, wherein the adjustment method according to any one of (5) to (7) is performed on a light unit provided in the vehicle.

In the configuration of (9), the fine adjustment of the light emitted from the sub headlight can be easily performed based on the cut-off line of the light emitted from the low-beam headlight as a reference. Additionally, the sub headlight provided in the vehicle can be directly adjusted in an efficient manner.

[EFFECTS OF THE TEACHING]

The present teaching is able to provide a light unit for use in a vehicle that leans into turns, that is easy to manufacture and that achieves both suppression of dazzling to an oncoming vehicle or the like and suppression of decrease in the visibility over a road surface at a long distance even while the vehicle that leans into turns is running on a curve.

These and other objects, features, aspects and advantages of the present teaching will become apparent to those skilled in the art from the following detailed description, which, taken in conjunction with the accompanying drawings, discloses some embodiments of the present teaching.

[BRIEF DESCRIPTION OF THE DRAWINGS]

[FIG. 1] A front elevational view schematically showing a motorcycle including a light unit according to a first embodiment.

[FIG. 2] A front elevational view schematically showing the light unit shown in FIG. 1.

[FIG. 3] A cross-sectional view schematically showing a cross-section of the light unit shown in FIG. 1 as taken along the line A-A.

[FIG. 4] A block diagram showing a basic configuration concerning the light unit shown in FIG. 1.

[FIG. 5] A front elevational view schematically showing optical axes and cut-off lines of light beams from a light unit of a motorcycle in an upright state.

[FIG. 6] (a) is a diagram schematically showing a screen light distribution in a case where the lean angle of the motorcycle takes a reference value $K_1$; (b) is a diagram schematically showing a screen light distribution in a case where the lean angle of the motorcycle takes a reference value $K_2$; and (c) is a diagram schematically showing a screen light distribution in a case where the lean angle of the motorcycle takes a reference value $K_3$.

[FIG. 7] (a) to (e) are diagrams each schematically showing a screen light distribution obtained when an adjustment method according to an embodiment is performed.

[FIG. 8] (a) to (i) are diagrams each schematically showing a screen light distribution obtained when an adjustment method according to another embodiment is performed.

[FIG. 9] A front elevational view schematically showing a light unit according to a second embodiment.

[FIG. 10] A front elevational view schematically showing a light unit according to a third embodiment.

[FIG. 11] A front elevational view schematically showing a light unit according to a fourth embodiment.

[FIG. 12] A front elevational view schematically showing a light unit according to a fifth embodiment.

[FIG. 13] A front elevational view schematically showing a light unit according to a sixth embodiment.

## [EMBODIMENTS FOR CARRYING OUT THE INVENTION]

The present inventors have conducted intensive studies in view of the problems described above, and focused on the fact that the brightness largely changes at the cut-off line as a boundary. Then, the present inventors have found out that a sub headlight configured to produce a cut-off line that is inclined when a vehicle body is upright is easy to adjust by using a cut-off line. The present inventors have eventually reached an idea of, instead of ensuring the positional accuracy of the cut-off line of the sub headlight by ensuring the accuracy in manufacturing, finely adjusting the cut-off line by making use of characteristics of the cut-off line.

However, the sub headlight is provided for the purpose of compensation for an illumination range of a low-beam headlight that decreases as a result of inclination of a cut-off line of light emitted from the low-beam headlight in a vehicle that leans into turns. In JP 4864562, therefore, the sub headlight emits light to an area above the light emitted from the low-beam headlight, in accordance with a cornering signal indicating that the vehicle is running on a curve. As a result, an illumination range of the sub headlight can be checked only when the vehicle is running on a curve. Moreover, the only way to determine whether or not an appropriate illumination range is produced during running is checking a light distribution on a road surface. This is why it has been difficult to adjust, by using a cut-off line, the cut-off line of the sub headlight such that dazzling to an oncoming vehicle or the like is suppressed.

Therefore, the present inventors have reached an idea of providing a sub headlight turn-on device for a vehicle's stopped state for turning on the sub headlight when the vehicle is stopped. By arbitrarily turning on the sub headlight when the vehicle is stopped, the cut-off line of the sub headlight can be checked.

Furthermore, the present inventors have reached an idea of providing a sub-headlight cut-off line moving device for moving the cut-off line of the light emitted from the sub headlight when the vehicle is stopped, to enable the cut-off line of the sub headlight to be adjusted by making use of characteristics of the cut-off line.

A light unit according to the present teaching achieves both suppression of dazzling to an oncoming vehicle or the like and suppression of decrease in the visibility over a road surface at a long distance even while the vehicle that leans into turns is running on a curve. The light unit according to the present teaching is easy to manufacture, because it requires a less accuracy in manufacturing.

<First Embodiment>

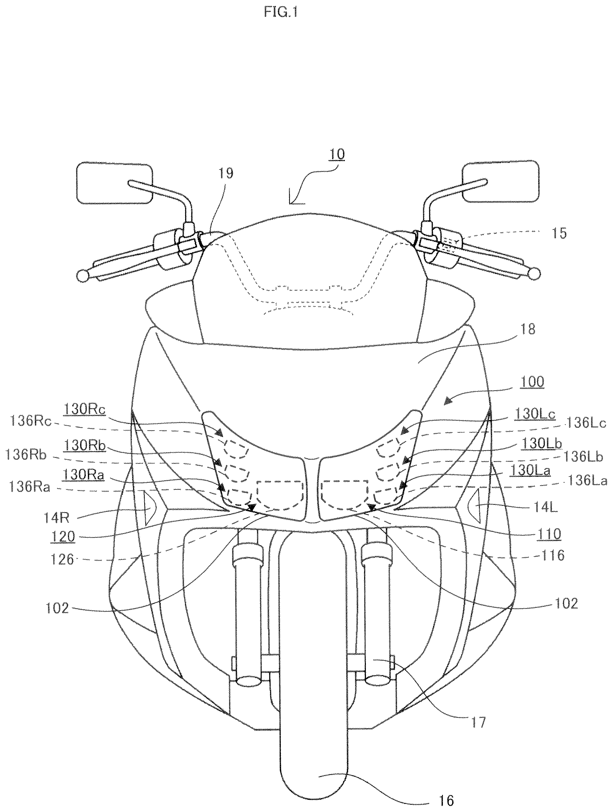

FIG. 1 is a front elevational view schematically showing a motorcycle including a light unit according to a first embodiment.

A motorcycle 10 is an example of a vehicle that leans into turns according to the present teaching. In the present teaching, no particular limitation is put on the vehicle that leans into turns. For example, saddle-ride type vehicles including motorcycles, three-wheeled motor vehicles, snowmobiles, and ATVs (all terrain vehicles) may be mentioned. In the following description, the terms "front" and "back" are terms with respect to an advancing direction of the vehicle, the terms "up" and "down" are terms with respect to the vertical direction of the vehicle, and the terms "right" and "left" are terms with respect to a rider.

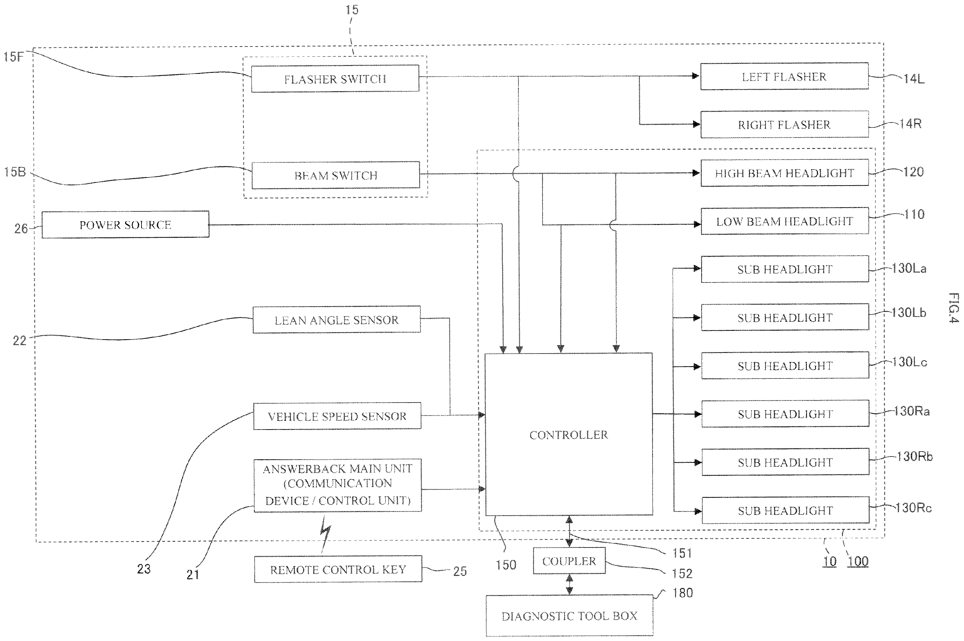

The motorcycle 10 includes a handlebar 19. An operation switch 15 is provided in a left portion of the handlebar 19 with respect to a width direction of the vehicle. The operation switch 15 includes a beam switch 15B and a flasher switch 15F (see FIG. 4). A steering shaft (not shown) is fixed to a center portion of the handlebar 19 with respect to the width direction of the vehicle. The steering shaft extends downward through a headpipe (not shown). A front fork 17 is provided at a lower end of the steering shaft. A front wheel 16 is rotatably supported at the lower end of the front fork 17. The headpipe is a member constituting a vehicle body frame. In the present teaching, no particular limitation is put on the vehicle body frame, and a conventionally known configuration is adoptable. The vehicle body frame corresponds to the vehicle body. The handlebar 19 corresponds to the vehicle body.

A front cover 18 covers a front part of the headpipe having the steering shaft passing therethrough. The motorcycle 10 includes a light unit 100. The light unit 100 is arranged inside the front cover 18. In a front surface of the front cover 18, an outer cover 102 of the light unit 100 is exposed. The front cover 18 corresponds to the vehicle body.

The outer cover 102 is transparent and made of, for example, a resin. The light unit 100 includes a high-beam headlight 120 and a low-beam headlight 110. The high-beam headlight is also called a running headlight. The low-beam headlight is also called a passing headlight. The high-beam headlight 120 illuminates an area ahead of the motorcycle 10 at a height equal to or above a horizontal plane of the light unit 100. The low-beam headlight 110 illuminates an area ahead of the motorcycle 10 at a height below the horizontal plane of the light unit 100.

The low-beam headlight 110 and the high-beam headlight 120 are turned on irrespective of the lean angle of the motorcycle 10. The high-beam headlight 120 and the low-beam headlight 110 are configured such that only one of them is turned on in accordance with an operation that the rider performs on the beam switch 15B (see FIG. 4). The low-beam headlight 110 and the high-beam headlight 120 correspond to the main headlight.

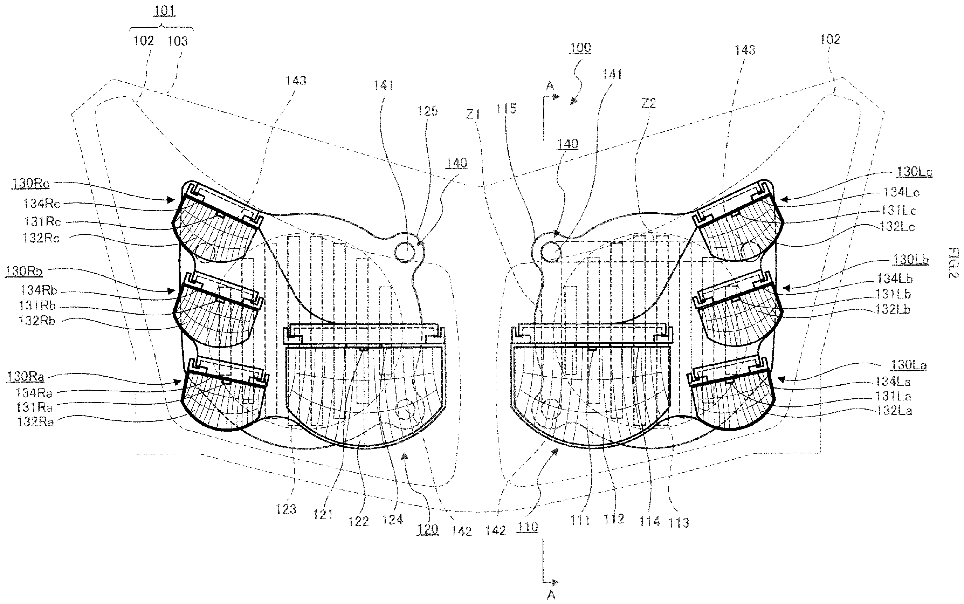

When the low-beam headlight 110 is turned on, a transparent surface 116 of the low-beam headlight 110 appears bright. The transparent surface 116 is recognized as the low-beam headlight 110 by a viewer. When seen from the front side of the motorcycle 10, the shape of the transparent surface 116 is substantially the same as the shape of a low-beam reflector 112 in a front elevational view (see FIG. 2).

When the high-beam headlight 120 is turned on, a transparent surface 126 of the high-beam headlight 120 appears bright. The transparent surface 126 is recognized as the high-beam headlight 120 by a viewer. When seen from the front side of the motorcycle 10, the shape of the transparent surface 126 is substantially the same as the shape of a high-beam reflector 122 in a front elevational view (see FIG. 2).

The light unit 100 includes a plurality of sub headlights 130 (130La to 130Lc, 130Ra to 130Rc). The light unit 100 is a light unit of variable light distribution type, whose light distribution varies in accordance with the lean angle. Each sub headlight 130 is turned on in accordance with the lean angle while the vehicle is running. Each sub headlight 130 is configured such that its optical axis, light source, and reflector are not moved in accordance with the lean angle.

The sub headlights 130L (130La to 130Lc) and the sub headlights 130R (130Ra to 130Rc) are provided at both sides with respect to the width direction of the vehicle. In the description herein, the sub headlight 130L represents a sub headlight that illuminates an area ahead and to the left of the motorcycle 10. The sub headlight 130R represents a sub headlight that illuminates an area ahead and to the right of the motorcycle 10.

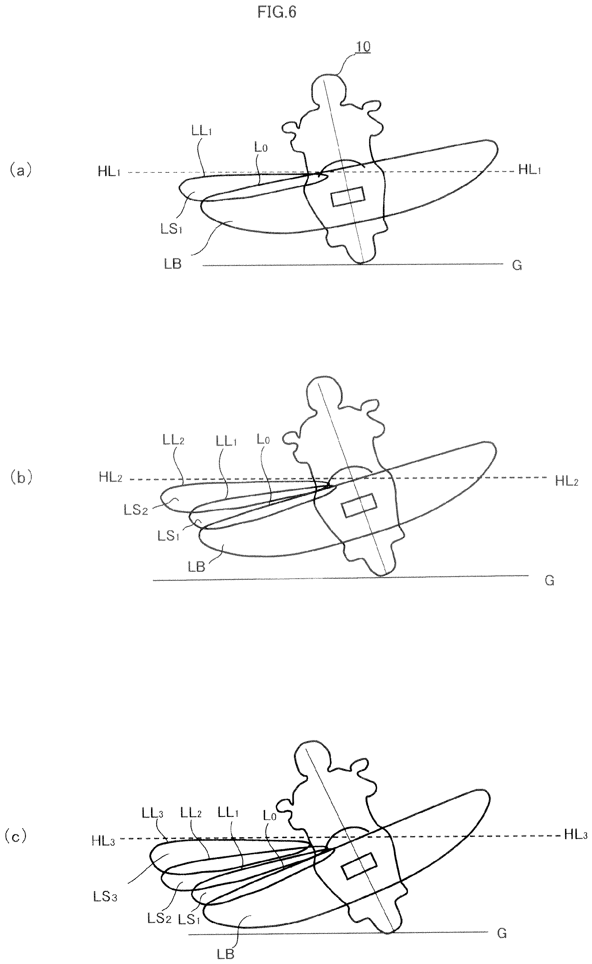

The sub headlights 130L (130La to 130Lc) are vertically arranged at the outer side of the low-beam headlight 110 with respect to the width direction of the vehicle. The sub headlights 130La to 130Lc, which are arranged in this order from the lower side, are turned on sequentially from the lowermost sub headlight in accordance with an increase in the lean angle. The sub headlights 130L (130La to 130Lc) illuminate an area ahead and left-outward of the vehicle with respect to the width direction of the vehicle. Illumination ranges of the sub headlights 130L (130La to 130Lc) are located in order from the center toward the upper left with respect to the width direction of the vehicle, and the illumination ranges overlap one another (see FIG. 6). The sub headlights 130R are identical to the sub headlights 130L except that they are substantially laterally symmetrical. In the description herein, the sub headlights 130La to 130Lc are turned on in the order of 130La, 130Lb, and 130Lc in accordance with an increase in the lean angle. The same applies to the sub headlights 130Ra to 130Rc.

When the sub headlights 130 (130La to 130Lc, 130Ra to 130Rc) are turned on, transparent surfaces 136 (136La to 136Lc, 136Ra to 136Rc) appear bright. The transparent surface 136 is recognized as the sub headlight 130 by a viewer. When seen from the front side of the motorcycle 10, the shape of the transparent surface 136 is substantially the same as the shape of a sub reflector 132 in a front elevational view (see FIG. 2).

The plurality of sub headlights 130L (130La to 130Lc) arranged to the left with respect to the width direction of the vehicle illuminate an area ahead of and left lateral to the motorcycle 10. The plurality of sub headlights 130R (130Ra to 130Rc) arranged to the right with respect to the width direction of the vehicle illuminate an area ahead of and right lateral to the motorcycle 10. The sub headlight 130 may illuminate an area at the same side (for example, the left side) as the side (for example, the left side) where the sub headlight 130 is arranged with respect to the width direction of the vehicle, or alternatively may illuminate an area at the side (for example, the right side) opposite to the side where the sub headlight 130 is arranged with respect to the width direction of the vehicle.

Flashers 14L and 14R, serving as direction indicators, are provided at both sides of the motorcycle 10 with respect to the width direction of the vehicle. The flashers 14L and 14R are configured such that either one of them is turned on in accordance with an operation that the rider performs on the flasher switch 15F (see FIG. 4). In the present teaching, no particular limitation is put on the positional relationship between the sub headlight and the flasher.

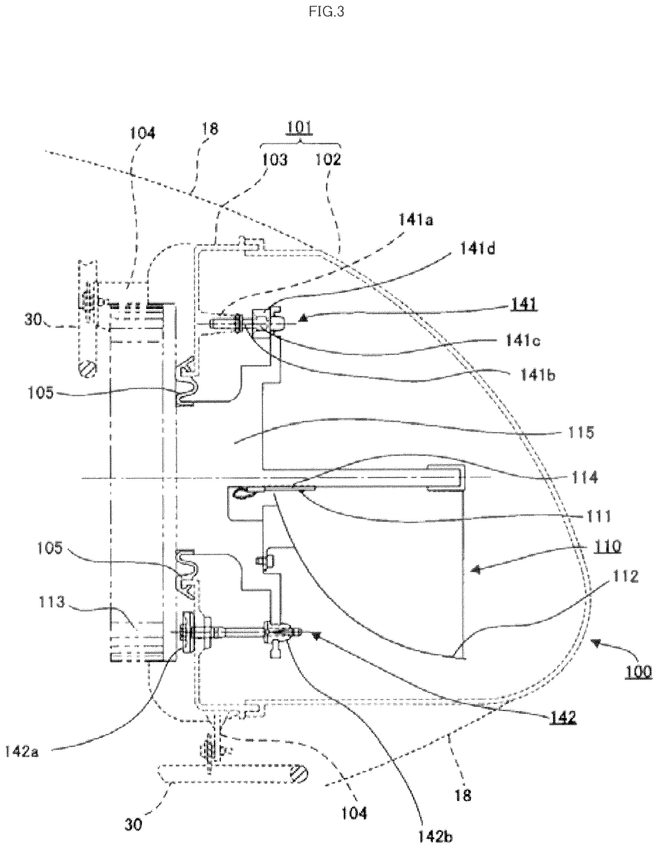

FIG. 2 is a front elevational view schematically showing the light unit 100 of FIG. 1. FIG. 3 is a cross-sectional view schematically showing a cross-section of the light unit of FIG. 1 as taken along the line A-A.

As shown in FIG. 2, the light unit 100 includes a cover 101 (fixed part). The cover 101 constitutes a lamp body. The cover 101 extends over opposite sides with respect to the width direction of the vehicle. The cover 101 includes an outer cover 102 and a rear cover 103. The outer cover 102 is transparent, and exposed on a front surface of the motorcycle 10 (see FIG. 1). The rear cover 103 has an opening opened in a front surface thereof. The outer cover 102 is arranged in the opening. The outer cover 102 is provided in each of the right and left sides with respect to the width direction of the vehicle. The outer cover 102 and the rear cover 103 are combined into the cover 101. As shown in FIG. 3, an outer surface of the rear cover 103 has an attachment part 104 for fixing the light unit 100 to the headpipe (not shown) that serves as the vehicle body frame. The headpipe (not shown) has a stay 30 for supporting the light unit 100. The attachment part 104 is attached to the stay 30, and thereby the light unit 100 is fixed to the headpipe serving as the vehicle body frame. A space for the storage of the low-beam headlight 110, the high-beam headlight 120, and the sub headlights 130 is formed within the cover 101 (see FIG. 3).

In the space provided within the cover 101, as shown in FIG. 2, the low-beam headlight 110 and the sub headlights 130L (130La to 130Lc) are arranged at one side (left side) with respect to the width direction of the vehicle.

As shown in FIGS. 2 and 3, the low-beam headlight 110 includes a low-beam LED light source 111, a low-beam reflector 112, a low-beam heat sink 113, a low-beam LED substrate 114, and a low-beam heat dissipation plate 115.

The low-beam LED light source 111 is provided on the low-beam LED substrate 114. The low-beam reflector 112 has a shape that surrounds the low-beam LED light source 111 except for a region facing the vehicle front side. An inner surface (a surface that receives light emitted from the low-beam LED light source 111) of the low-beam reflector 112 is configured to reflect light emitted from the low-beam LED light source 111. A surface (a surface on which the low-beam LED light source 111 is mounted) of the low-beam LED substrate 114 is configured to reflect light emitted from the low-beam LED light source 111, and constitutes a part of the low-beam reflector 112.

The light emitted from the low-beam LED light source 111 is directly emitted to the vehicle front side without being reflected by the low-beam reflector 112, or emitted to the vehicle front side after being reflected by the low-beam reflector 112. The light reflected by the low-beam reflector 112 is emitted to the vehicle front side in such a manner that upper and lower parts of the light cross or do not cross each other with respect to the vertical direction. Light emitted toward the vehicle front side (toward a region not surrounded by the low-beam reflector 112) in this manner is regarded as the light emitted from the low-beam headlight 110.

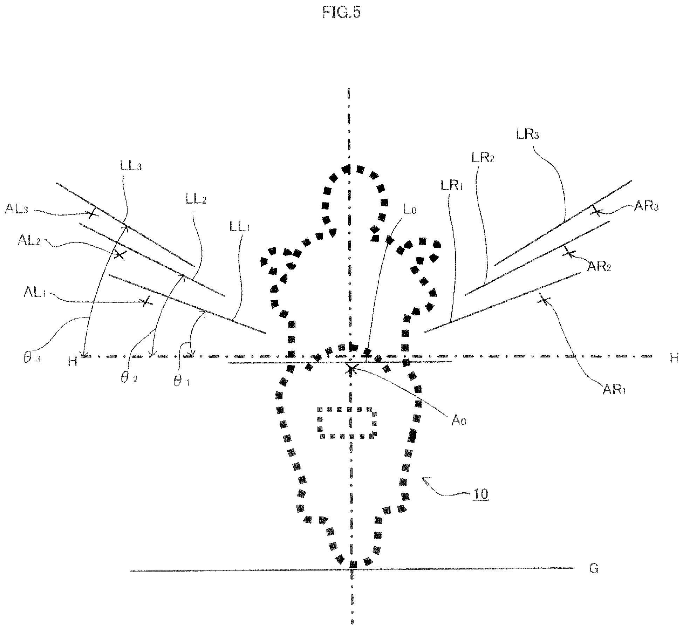

A light distribution of the low-beam headlight 110 is formed by the low-beam reflector 112. The low-beam reflector 112 has a shape that partially blocks the light emitted from the low-beam LED light source 111. For example, in a case where the upper and lower parts of light reflected by the reflector cross each other with respect to the vertical direction when the reflected light is emitted to the vehicle front side, the lower part of the reflected light is blocked. In a case where the upper and lower parts of light reflected by the reflector do not cross each other with respect to the vertical direction, the upper part of the reflected light is blocked. As a result of blocking of light by the low-beam reflector 112, a cut-off line $L_0$ is formed above the light emitted from the low-beam headlight 110. The cut-off line $L_0$ extends in the width direction of the vehicle when the vehicle body is upright (FIGS. 5 and 6). No particular limitation is put on which part of the light emitted from the low-beam LED light source 111 is to be blocked by the low-beam reflector 112. It suffices that the low-beam reflector 112 causes the cut-off line $L_0$ to be formed above the light emitted from the low-beam headlight 110 (above an illumination range in a screen light distribution). The light emitted from the low-beam headlight 110 is emitted to the vehicle front side through the outer cover 102.

As shown in FIG. 2, each of the sub headlights 130L (130La to 130Lc) includes a sub LED light source 131L, a sub reflector 132L, and a sub LED substrate 134L. The sub headlight is not particularly limited. Instead of a sub headlight including a reflector as illustrated in this embodiment, for example, a sub headlight including a projection lens configured to directly project light of a light source in the form of light is also adoptable. No particular limitation is put on a sub headlight including a reflector, and examples thereof include a sub headlight of projector type and a sub headlight of parabola type.

The sub LED light source 131L is provided on the sub LED substrate 134L. The sub reflector 132L has a shape that surrounds the sub LED light source 131L except for a region facing the vehicle front side. An inner surface (a surface that receives light emitted from the sub LED light source 131L) of the sub reflector 132L is configured to reflect light emitted from the sub LED light source 131L. A surface of the sub LED substrate 134L is configured to reflect light emitted from the sub LED light source 131L, and constitutes a part of the sub reflector 132L.

The light emitted from the sub LED light source 131L is directly emitted to the vehicle front side without being reflected by the sub reflector 132L, or emitted to the vehicle front side after being reflected by the sub reflector 132L. Light emitted toward the vehicle front side (toward a region not surrounded by the sub reflector 132L) in this manner is regarded as the light emitted from the sub headlight 130L.

A light distribution of the sub headlight 130L is formed by the sub reflector 132L. Each of the sub reflectors 132La to 132Lc has a shape that partially blocks the light emitted from each of the sub LED light sources 131La to 131Lc. The sub reflectors 132La to 132Lc form cut-off lines $LL_1$, $LL_2$, and $LL_3$ above the light emitted from the sub LED light sources 131La to 131Lc, respectively. The cut-off lines $LL_1$, $LL_2$, and $LL_3$ extend in the width direction of the vehicle when the vehicle body is upright (FIGS. 5 and 6). The angles of the cut-off lines $LL_1$, $LL_2$, and $LL_3$ are different from the angle of the cut-off line $L_0$. The angles of the cut-off lines $LL_1$, $LL_2$, and $LL_3$ are different from one another. The light emitted from the sub headlight 130L is emitted to the vehicle front side through the outer cover 102.

The low-beam heat dissipation plate 115 is a single plate-like member. The low-beam heat dissipation plate 115 is arranged in the cover 101 with a surface of the low-beam heat dissipation plate 115 facing the vehicle front side. The low-beam LED light source 111, the low-beam reflector 112, and the low-beam LED substrate 114; and the sub LED light source 131L, the sub reflector 132L, and the sub LED substrate 134L are located at the front side of the low-beam heat dissipation plate 115. The low-beam LED substrate 114 having the low-beam LED light source 111 mounted thereon, the low-beam reflector 112, the sub LED substrate 134L having the sub LED light source 131L mounted thereon, and the sub reflector 132L are supported on the low-beam heat dissipation plate 115. Thus, the low-beam heat dissipation plate 115 serves also as a heat dissipation plate of the sub headlight 130L. In other words, the low-beam heat dissipation plate 115 is integrated with the heat dissipation plate of the sub headlight 130L.

The low-beam heat sink 113 is located at the back side of the low-beam heat dissipation plate 115. The low-beam heat sink 113 is exposed to the outside of the cover 101 through an opening provided at the back of the cover 101 (see FIG. 3). A space between the cover 101 and the low-beam heat sink 113 is sealed with a rubber boot part 105 (waterproof mechanism). The low-beam heat sink 113 is integrated with the low-beam heat dissipation plate 115. Thus, the low-beam heat sink 113 serves also as a heat sink (sub heat sink) of the sub headlight 130L. In other words, the low-beam heat sink 113 is integrated with the heat sink (sub heat sink) of the sub headlight 130L.

In the light unit 100, as described above, the low-beam heat sink 113 (main heat sink) is integrated with the low-beam reflector 112. The low-beam heat sink 113, which serves also as the sub heat sink, is integrated with the sub reflector 132L. Since the low-beam heat sink 113 serves also as the sub heat sink, heat conduction between the low-beam heat sink 113 and the sub heat sink is allowed. In other words, the low-beam heat sink 113 includes a part having a heat capacity for dissipating heat of the low-beam headlight 110 and a part having a heat capacity for dissipating heat of the sub headlight 130L, and heat conduction between these parts is allowed.

The low-beam reflector 112 and the sub reflector 132L are made of, for example, a resin. The low-beam heat sink 113 and the low-beam heat dissipation plate 115 are made of, for example, a metal (e.g., aluminum). The thermal conductivity of the low-beam heat sink 113 and the low-beam heat dissipation plate 115 is higher than that of the low-beam reflector 112 and the sub reflector 132L. The rigidity of the low-beam heat sink 113 and the low-beam heat dissipation plate 115 is higher than that of the low-beam reflector 112 and the sub reflector 132L. Therefore, heat generated in the low-beam LED light source 111, and the low-beam LED substrate 114; and the sub LED light source 131L, and the sub LED substrate 134L is transferred to the low-beam heat sink 113 via the low-beam heat dissipation plate 115, and then dissipated from the low-beam heat sink 113.

In the low-beam heat dissipation plate 115, a reference point 141, a vertical movement point 142, and a widthwise movement point 143 are provided. The reference point 141, the vertical movement point 142, and the widthwise movement point 143 correspond to position set points, and constitute a cut-off line moving device 140. As shown in FIGS. 2 and 3, the reference point 141 and the vertical movement point 142 line up in the vertical direction. As shown in FIG. 2, the reference point 141 and the widthwise movement point 143 line up in the width direction of the vehicle.

As shown in FIG. 3, a boss portion 141a that protrudes from the rear cover 103 toward the vehicle front side is provided at the reference point 141. A threaded shaft 141b is received in and fixed to the boss portion 141a. The threaded shaft 141b has a ball portion 141c provided at the vehicle front side. A ball bearing portion 141d is provided at the reference point 141. The ball bearing portion 141d is arranged on a back surface of the low-beam heat dissipation plate 115. The ball portion 141c is fitted in the ball bearing portion 141d. The ball portion 141c is loosely fitted and therefore allowed to freely move within the ball bearing portion 141d. Thus, at the reference point 141, the low-beam heat dissipation plate 115 is supported on the cover 101 in such a manner that movement of the low-beam heat dissipation plate 115 at the reference point 141 is limited and that three-dimensional movement of the low-beam heat dissipation plate 115 (a change in the orientation of the low-beam heat dissipation plate 115) is allowed.

As shown in FIG. 3, an aiming bolt 142a is provided at the vertical movement point 142. The aiming bolt 142a is screwed into a threaded hole of the rear cover 103 in the direction from the vehicle back side toward the vehicle front side. An aiming nut 142b is also provided at the vertical movement point 142. The aiming nut 142b is arranged on the low-beam heat dissipation plate 115. An end portion of the aiming bolt 142a at the vehicle front side is screwed into the aiming nut 142b in the direction from the vehicle back side toward the vehicle front side.

Tightening the aiming bolt 142a to move the aiming bolt 142a toward the vehicle front side causes the low-beam heat dissipation plate 115 to move toward the vehicle front side at the vertical movement point 142. As a result, the low-beam heat dissipation plate 115 is tilted about the reference point 141, so that a surface of the low-beam heat dissipation plate 115 at the vehicle front side faces upward. Loosening the aiming bolt 142a to move the aiming bolt 142a toward the vehicle back side causes the low-beam heat dissipation plate 115 to move toward the vehicle back side at the vertical movement point 142. As a result, the low-beam heat dissipation plate 115 is tilted about the reference point 141, so that the surface of the low-beam heat dissipation plate 115 at the vehicle front side faces downward. In this manner, at the vertical movement point 142, the low-beam heat dissipation plate 115 is allowed to move such that the orientation of the low-beam heat dissipation plate 115 is changed in the vertical direction.

The widthwise movement point 143 is structured in the same manner as the vertical movement point 142, and therefore a description of the structure of the widthwise movement point 143 is omitted herein. At the widthwise movement point 143, the low-beam heat dissipation plate 115 is allowed to move such that the orientation of the low-beam heat dissipation plate 115 is changed in the width direction of the vehicle.

By means of the reference point 141, the vertical movement point 142, and the widthwise movement point 143, the low-beam heat dissipation plate 115 is three-dimensionally moved. This enables the low-beam reflector 112 integrated with the low-beam heat dissipation plate 115, the sub reflector 132L, and the low-beam heat sink 113 serving also as the sub heat sink, to be moved simultaneously relative to the headpipe (vehicle body) under a state where the cover 101 (fixed part) is fixed to the headpipe (vehicle body). The reference point 141, the vertical movement point 142, and the widthwise movement point 143 correspond to the plurality of position set points for setting positions, after the movement, of the low-beam reflector 112, the sub reflector 132L, and the low-beam heat sink 113 serving also as the sub heat sink. In other words, the light unit 100 is provided with the cut-off line moving device 140 including a plurality of position set points (the reference point 141, the vertical movement point 142, and the widthwise movement point 143). The cut-off line moving device 140 is configured to, when the motorcycle 10 is stopped, change the orientation of the sub headlight 130L to thereby move the cut-off line LL of the light emitted from the sub headlight 130L. The cut-off line moving device 140 is configured to move the cut-off line LL produced by the sub headlight 130L under a state where the motorcycle 10 is kept stopped (with the motorcycle 10 being not inclined). The cut-off line moving device 140 is configured to move the cut-off line LL produced by the sub headlight 130L substantially without changing the brightness of the sub headlight 130L. The cut-off line moving device 140 does not cause the cut-off line LL produced by the sub headlight 130L to move in accordance with a change in the inclination angle of the motorcycle 10. In this embodiment, one reference point and two movement points are provided, but the present teaching is not limited to this example. All of the plurality of position set points may be movement points. It suffices that the number of position set points is two or more. The number of position set points is preferably three or more, and more preferably three. No particular limitation is put on each of the position set points 141 to 143. A conventionally known structure is adoptable therefor.

In the light unit 100, the low-beam reflector 112 integrated with the low-beam heat dissipation plate 115, the sub reflector 132L, and the low-beam heat sink 113 serving also as the sub heat sink are moved at the plurality of position set points (the reference point 141, the vertical movement point 142, and the widthwise movement point 143). Thus, the distance between the reference point 141 and the vertical movement point 142 and the distance between the reference point 141 and the widthwise movement point 143 are set relatively long. This can improve the accuracy of adjustment of the low-beam reflector 112 and the sub reflector 132L.

The plurality of position set points (the reference point 141, the vertical movement point 142, and the widthwise movement point 143) are provided on the low-beam heat dissipation plate 115. The low-beam heat dissipation plate 115 is a part integrated with the low-beam heat sink 113 such that heat conduction to and from the low-beam heat sink 113 serving also as the sub heat sink is allowed. The low-beam heat dissipation plate 115 has a relatively high rigidity. Thus, adjustment of positions can be performed by means of the low-beam heat dissipation plate 115 having a relatively high rigidity.

Among the transparent surfaces 116, 126, and 136 (see FIG. 1) of the lights 110, 120, and 130 included in the light unit 100, the transparent surface 136Lc (sub reflector 132Lc) of the sub headlight 130Lc is located closest to the widthwise movement point 143. More specifically, the widthwise movement point 143 overlaps the transparent surface 136Lc of the sub headlight 130Lc in a front elevational view of the light unit 100. This enables more accurate adjustment of positions. Here, the front elevational view of the light unit 100 means a view of the light unit 100 when seen in the same direction as the direction in which the motorcycle 10 (vehicle that leans into turns) is seen in a front elevational view thereof.

A straight line Z1 connecting the reference point 141 to the vertical movement point 142 and a straight line Z2 connecting the reference point 141 to the widthwise movement point 143 serve as axis lines on which the low-beam heat sink 113 is moved. In a front elevational view of the light unit 100, as shown in FIG. 2, the axis line Z (Z1, Z2) overlaps the low-beam heat sink 113. This allows a reduction in a space for ensuring a range of movement of the low-beam heat sink 113. As a result, the light unit 100 can be downsized. Since the range of movement of the low-beam heat sink 113 is narrowed, the rubber boot part 105 (waterproof mechanism) can be downsized.

In the space provided within the cover 101, as shown in FIG. 2, the high-beam headlight 120 and the sub headlights 130R (130Ra to 130Rc) are arranged at the other side (right side) with respect to the width direction of the vehicle. Each element of the sub headlight 130R has the same configuration as that of the sub headlight 130L, and therefore a description thereof is omitted herein.

As shown in FIG. 2, the high-beam headlight 120 includes a high-beam LED light source 121, a high-beam reflector 122, a high-beam heat sink 123, a high-beam LED substrate 124, and a high-beam heat dissipation plate 125.

The high-beam LED light source 121 is provided on the high-beam LED substrate 124. The high-beam reflector 122 has a shape that surrounds the high-beam LED light source 121 except for a region facing the vehicle front side. An inner surface (a surface that receives light emitted from the high-beam LED light source 121) of the high-beam reflector 122 is configured to reflect light emitted from the high-beam LED light source 121. A surface (a surface on which the high-beam LED light source 121 is mounted) of the high-beam LED substrate 124 is configured to reflect light emitted from the high-beam LED light source 121, and constitutes a part of the high-beam reflector 122.

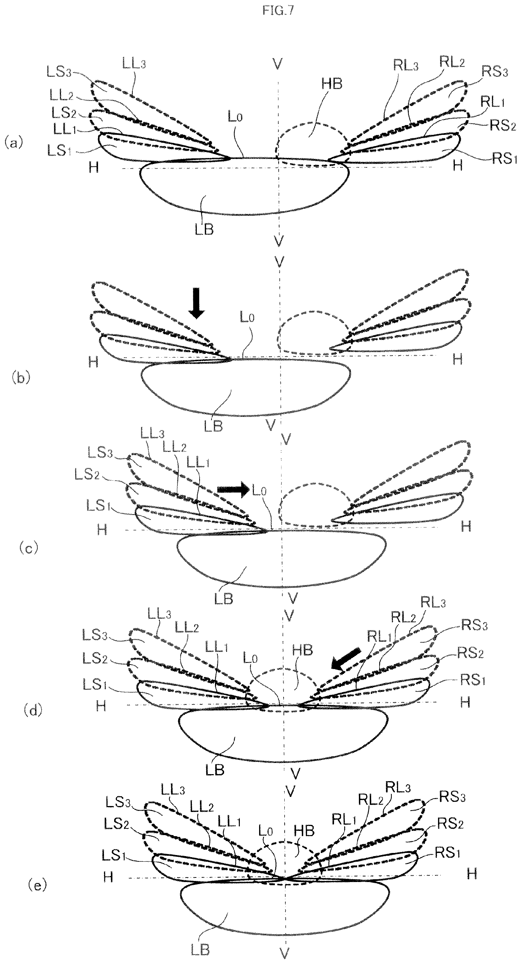

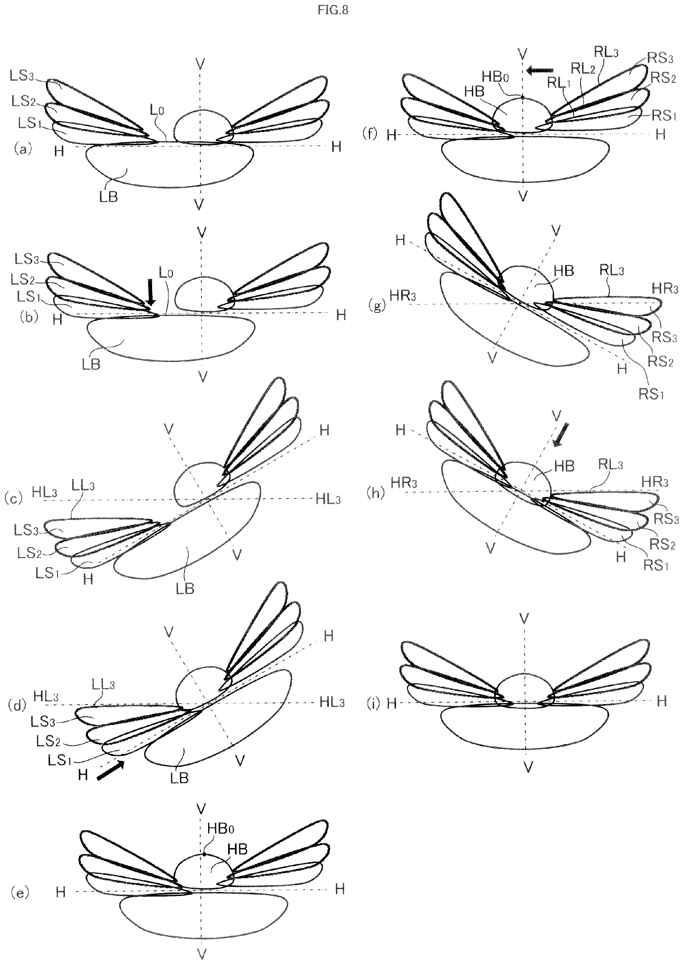

A light distribution of the high-beam headlight 120 is formed by the high-beam reflector 122. Light emitted from the high-beam headlight 120 has no cut-off line. The light emitted from the high-beam headlight 120 is emitted to the vehicle front side through the outer cover 102. The light (illumination range HB) emitted from the high-beam headlight 120 under a state where the motorcycle 10 is upright is smaller than the light emitted from the sub headlight 130 ($LS_1$ to $LS_3$, $RS_1$ to $RS_3$) with respect to the width direction of the vehicle (see FIGS. 7 and 8).

The high-beam heat dissipation plate 125 is a single plate-like member. The high-beam heat dissipation plate 125 is arranged in the cover 101 with a surface of the high-beam heat dissipation plate 125 facing the vehicle front side. The high-beam LED light source 121, the high-beam reflector 122, and the high-beam LED substrate 124; and the sub LED light source 131R, the sub reflector 132R, and the sub LED substrate 134R are located at the front side of the high-beam heat dissipation plate 125. The high-beam LED substrate 124 having the high-beam LED light source 121 mounted thereon, and the high-beam reflector 122; and the sub LED substrate 134R having the sub LED light source 131R mounted thereon, and the sub reflector 132R are supported on the high-beam heat dissipation plate 125. Thus, the high-beam heat dissipation plate 125 serves also as a heat dissipation plate of the sub headlight 130R. In other words, the high-beam heat dissipation plate 125 is integrated with the heat dissipation plate of the sub headlight 130R.

The high-beam heat sink 123 is located at the back side of the high-beam heat dissipation plate 125. The high-beam heat sink 123 is exposed to the outside of the cover 101 (see FIG. 3). The high-beam heat sink 123 is integrated with the high-beam heat dissipation plate 125. Thus, the high-beam heat sink 123 serves also as a heat sink (sub heat sink) of the sub headlight 130R. In other words, the high-beam heat sink 123 is integrated with the heat sink (sub heat sink) of the sub headlight 130R.

In the light unit 100, as described above, the high-beam heat sink 123, which serves also as the sub heat sink, is integrated with the sub reflector 132R. Since the high-beam heat sink 123 serves also as the sub heat sink, heat conduction between the high-beam heat sink 123 and the sub heat sink is allowed. In other words, the high-beam heat sink 123 includes a part having a heat capacity for dissipating heat of the high-beam headlight 120 and a part having a heat capacity for dissipating heat of the sub headlight 130R, and heat conduction between these parts is allowed.

The high-beam reflector 122 and the sub reflector 132R are made of, for example, a resin. The high-beam heat sink 123 and the high-beam heat dissipation plate 125 are made of, for example, a metal (e.g., aluminum). The thermal conductivity of the high-beam heat sink 123 and the high-beam heat dissipation plate 125 is higher than that of the high-beam reflector 122 and the sub reflector 132R. The rigidity of the high-beam heat sink 123 and the high-beam heat dissipation plate 125 is higher than that of the high-beam reflector 122 and the sub reflector 132R. Therefore, heat generated in the high-beam LED light source 121, and the high-beam LED substrate 124; and the sub LED light source 131R, and the sub LED substrate 134R is transferred to the high-beam heat sink 123 via the high-beam heat dissipation plate 125, and then dissipated from the high-beam heat sink 123.

In the high-beam heat dissipation plate 125, similarly to in the low-beam heat dissipation plate 115, a reference point 141, a vertical movement point 142, and a widthwise movement point 143 are provided. Since the position set points 141 to 143 provided on the high-beam heat dissipation plate 125 have the same configurations as those provided on the low-beam heat dissipation plate 115, a description thereof is omitted herein.

The lights 110, 120, and 130 are arranged such that the light sources 111, 121, and 131 are located on lower surfaces of the substrates 114, 124, and 134, respectively. The lights 110, 120, and 130 are arranged in such a manner that the LED substrates 114, 124, and 134 are inclined with a larger inclination angle relative to a horizontal line as the lean angle at which the lights 110, 120, and 130 are set to be turned on is larger. The lean angle at which the lights 110, 120, and 130 are set to be turned on increases in the order of the low-beam headlight 110 and the high-beam headlight 120, the sub headlights 130La and 130Ra, the sub headlights 130Lb and 130Rb, and the sub headlights 130Lc and 130Rc. Accordingly, the inclination angle of the LED substrates 114, 124, and 134 increases in the order of the substrates 114 and 124, the substrates 134La and 134Ra, the substrates 134Lb and 134Rb, and the substrates 134Lc and 134Rc. The lights 110 and 130L are integrated with the low-beam heat sink 113. In other words, the lights 110 and 130L are integrated with each other by the low-beam heat sink 113. In a physical sense, the lights 110 and 130L are not directly joined to each other.

FIG. 4 is a block diagram showing a basic configuration concerning the light unit 100 shown in FIG. 1.

The operation switch 15 includes the beam switch 15B and the flasher switch 15F. The beam switch 15B is connected to the high-beam headlight 120 and the low-beam headlight 110. When the rider operates the beam switch 15B, turn-on/turn-off of the high-beam headlight 120 and the low-beam headlight 110 is switched in accordance with the operation performed on the beam switch 15B.

The flasher switch 15F is connected to the flashers 14L and 14R. When the rider operates the flasher switch 15F, one of the flashers 14L and 14R is caused to flash in accordance with the operation performed on the flasher switch 15F.

In the motorcycle 10, a lean angle sensor 22 and a vehicle speed sensor 23 are provided. In this embodiment, the lean angle sensor 22 is a gyro sensor that detects the angular velocity about the front-back axis of the motorcycle 10. The lean angle sensor 22 supplies, to a controller 150, a signal indicating the detected angular velocity (roll rate) about the front-back axis. The vehicle speed sensor 23 detects the vehicle speed, and supplies, to the controller 150, a signal indicating the detected vehicle speed. Each time a predetermined timing comes during running, the controller 150 calculates the lean angle of the motorcycle 10 based on the angular velocity about the front-back axis and the vehicle speed.

In this embodiment, the roll rate is integrated overtime, and the vehicle speed is used as correction information, thereby calculating the lean angle. However, in the present teaching, a method for calculating the lean angle is not limited to this example. In the calculation of the lean angle, the vehicle speed is not an essential variable. For calculating the lean angle, a conventionally known method is adoptable. For example, the calculation may be performed based on a static equilibrium equation by using the yaw rate (angular velocity about the vertical axis) and the vehicle speed. The correction information is not limited to the vehicle speed. For example, it may be acceptable to provide a plurality of gyro sensors and G sensors and use values obtained from these sensors and the vehicle speed as the correction information. Instead of the vehicle speed, GPS position information and/or geomagnetic information may be used as the correction information. No particular limitation is put on sensors (detection part) for detecting variables that are available for obtaining the lean angle. An appropriate sensor may be provided in accordance with variables available for the calculation.

The controller 150 includes a memory (not shown).

The memory stores, in the form of data, a reference value K(°) to be compared with the lean angle. In this embodiment, the memory stores three reference values (a reference value $K_1$, a reference value $K_2$, and a reference value $K_3$). The reference value $K_1$, the reference value $K_2$, and the reference value $K_3$ satisfy the relationship of [the reference value $K_1$ < the reference value $K_2$ < the reference value $K_3$]. The reference value $K_1$ is associated with the sub headlights 130La and 130Ra. The reference value $K_2$ is associated with the sub headlights 130Lb and 130Rb. The reference value $K_3$ is associated with the sub headlights 130Lc and 130Rc.

An answerback main unit 21 is connected to the controller 150. The answerback main unit 21 receives a signal radio wave from a remote control key 25.

The sub headlights 130La to 130Lc, 130Ra to 130Rc are connected to the controller 150. A power source 26 (battery) is connected to the high-beam headlight 120 and the low-beam headlight 110 via the beam switch 15B. The power source 26 is connected to the flashers 14L and 14R via the flasher switch 15F. The power source 26 is connected to the controller 150.

The controller 150 controls the brightness of the sub headlights 130La to 130Lc, 130Ra to 130Rc. In this embodiment, when the lean angle reaches a reference value while the vehicle is running, the controller 150 turns on the sub headlight 130 associated with the reference value. In this embodiment, a state where the controller 150 receives a running signal indicating that the motorcycle 10 is running from the vehicle speed sensor 23 or the like corresponds to a state where the vehicle is running. The running signal is, for example, a signal indicating the vehicle speed. The state where the vehicle is stopped is a state where the motorcycle 10 is stopped. A state where the controller 150 does not receive the running signal corresponds to the state where the vehicle is stopped. The state where the vehicle is stopped can occur irrespective of whether it is a state of idling or a state of engine stop. In this embodiment, the sub headlights 130La to 130Lc, 130Ra to 130Rc are LEDs. The controller 150 performs a pulse width modulation control (PWM control) to adjust the duty ratio, and thereby controls the brightness (light control). A method for performing the light control on the sub headlight is not particularly limited. For example, a current supplied to the sub headlight may be controlled, or a voltage supplied to the sub headlight may be controlled.

A harness 151 is connected to the controller 150. The harness 151 has, in an end portion thereof, a coupler 152. The controller 150 is physically placed inside a cover (for example, the front cover 18) of the vehicle body. The coupler 152 may be fixed to an exterior part of the controller 150 inside the cover of the vehicle body, or may be provided in an end portion of the harness 151 that extends from the controller 150 to the outside of the exterior part of the controller 150. A diagnostic tool box 180 can be connected to the coupler 152. The diagnostic tool box 180 is connected to the coupler 152 at a time of, for example, check or adjustment of the motorcycle 10. Normally, the diagnostic tool box 180 is not connected during running. In this embodiment, the controller 150 is configured to, under a condition that the diagnostic tool box 180 is connected to the coupler 152, turn on the sub headlights 130L and 130R irrespective of the degree of inclination of the vehicle body when the vehicle is stopped. In this embodiment, it may be also acceptable that the sub headlights 130L and 130R are turned on in accordance with the degree of inclination of the vehicle body when the vehicle is stopped. In such a case, for example, the degree of inclination of the vehicle body when the vehicle is stopped may be set as the lean angle, and the sub headlight 130 may be turned on when the degree of inclination of the vehicle body reaches the reference value. It may be also possible that, when a rider, an operator, or the like, makes a predetermined input under a condition that the diagnostic tool box 180 is connected to the coupler 152, the sub headlight 130 is turned on irrespective of or in accordance with the degree of inclination of the vehicle body. Under a condition that the diagnostic tool box 180 is connected to the controller 150, the controller 150 functions as the sub headlight turn-on device for a vehicle's stopped state. Under a condition that the diagnostic tool box 180 is connected to the controller 150, the low-beam headlight 110 or the high-beam headlight 120 is turned on in accordance with an operation that a rider, an operator, or the like, has performed on the operation switch 15. This can cause the sub headlight 130 to be turned on under a state where the main headlight is turned on when the vehicle is stopped.

The controller 150 may have a switch for turning on the sub headlight 130 when the vehicle is stopped. The switch is arranged, for example, inside the cover of the vehicle body. Alternatively, the switch may be arranged outside the cover of the vehicle body. The sub headlight 130 may be turned on irrespective of or in accordance with the degree of inclination of the vehicle body on a condition that the switch is operated by a rider, an operator, or the like, when the vehicle is stopped. The switch corresponds to the sub headlight turn-on device for a vehicle's stopped state. This can cause the sub headlight 130 to be turned on under a state where the main headlight (the low-beam headlight 110 or the high-beam headlight 120) is turned on when the vehicle is stopped.

The controller 150 may be configured to, on a condition that a rider, an operator, or the like, makes a predetermined input when the vehicle is stopped, turn on the sub headlight 130 irrespective of or in accordance with the degree of inclination of the vehicle body. For example, the controller 150 may be configured to, on a condition that the beam switch 15B is operated so that an instruction for turning on the low-beam headlight 110 is inputted at a time of engine stop, turn on the sub headlight 130 irrespective of or in accordance with the degree of inclination of the vehicle body. In this case, the controller 150 functions as the sub headlight turn-on device for a vehicle's stopped state. The sub headlight 130 can be turned on under a state where the main headlight (the low-beam headlight 110 and the high-beam headlight 120) is turned on when the vehicle is stopped.

It may be also possible to change a wiring (not shown) between the sub headlight 130 and the power source 26 when the vehicle is stopped so that the sub headlight 130 is turned on when the vehicle is stopped. For example, the sub headlight 130 may be turned on by changing the wiring so as to prevent the controller 150 from performing a control for turning on the sub headlight 130 and then supplying a current from the power source 26 to the sub headlight 130. For changing the wiring, for example, providing an additional harness is adoptable. In such a case, the additional harness corresponds to the sub headlight turn-on device for a vehicle's stopped state. This can cause the sub headlight 130 to be turned on under a state where the main headlight (the low-beam headlight 110 and the high-beam headlight 120) is turned on when the vehicle is stopped. The sub headlight turn-on device for a vehicle's stopped state is not particularly limited, as long as it is an apparatus and/or a member that is/are able to turn on the sub headlight when the vehicle is stopped. The sub headlight turn-on device for a vehicle's stopped state may be made up of a single apparatus or member, or may be made up of a plurality of apparatuses or members.

The light source is not limited to an LED, and other examples thereof include an HID valve and a filament valve. One sub headlight may include a plurality of light sources having different brightnesses. In such a configuration, the light control on the sub headlight can be implemented by switching which light source is turned on. One sub headlight may include a plurality of light sources. In such a configuration, the light control on the sub headlight can be implemented by changing the number or combination of the light sources to be turned on. The brightnesses of the plurality of light sources may be either the same or different.

FIG. 5 is a front elevational view schematically showing optical axes and cut-off lines of light beams from the light unit 100 of the motorcycle 10 in an upright state.

The motorcycle 10 stands upright on a flat ground G. An optical axis $A_0$ of the low-beam headlight 110 is located below a horizontal line H of the low-beam headlight 110. A cut-off line $L_0$ of the low-beam headlight 110 is located above the optical axis $A_0$, and located below the horizontal line H of the low-beam headlight 110. The cut-off line $L_0$ extends right and left in the width direction of the vehicle. An illumination range of the low-beam headlight 110 covers both right and left sides with respect to the width direction of the vehicle. The horizontal line H of the low-beam headlight 110 means a horizontal line passing through the low-beam LED light source 111.

The optical axes $AL_1$ to $AL_3$ of the sub headlights 130La to 130Lc are located outward in the order of the optical axes $AL_1$ to $AL_3$ with respect to the width direction of the vehicle. The optical axes $AL_1$ to $AL_3$ of the sub headlights 130La to 130Lc are located above the optical axis $A_0$ of the low-beam headlight 110. Cut-off lines $LL_1$ to $LL_3$ of the sub headlights 130La to 130Lc extend obliquely upward toward the outside, and at least an outer portion thereof with respect to the width direction of the vehicle is located above the horizontal line H. Inclination angles $\theta_1$ to $\theta_3$ of the cut-off lines $LL_1$ to $LL_3$ of the sub headlights 130La to 130Lc increase in the order of the inclination angles $\theta_1$ to $\theta_3$. Except for whether the sub headlight lights are provided at the right side or the left side of the symmetry, the sub headlights 130Ra to 130Rc are identical to the sub headlights 130La to 130Lc described above. Therefore, a description thereof will be omitted.

The cut-off line is a bright-dark limit that occurs at the upper side of emitted light. The bright-dark limit can be recognized by, for example, visual observation. The bright-dark limit may have a certain thickness (width). The cut-off line is produced by, for example, blocking of an upper portion of light emitted from a light source to the vehicle front side. The light emitted from the light source to the vehicle front side includes light that is emitted to the vehicle front side without being reflected by a reflector and light that is emitted to the vehicle front side after being reflected by the reflector. In a screen light distribution, the cut-off line is produced at an upper edge of an illumination range. In a road-surface light distribution, the cut-off line is produced at an edge of an illumination range located at the side remote from the vehicle. The cut-off line is produced by, for example, a light block part (e.g., a shade) provided in a reflector. The light block part may be a member separate from the reflector. In a case where no light block part is provided and a bright-dark limit is produced by, for example, the shape of the reflector, the bright-dark limit corresponds to the cut-off line of the present teaching.

The cut-off line of the low-beam headlight extends in the width direction of the vehicle when the vehicle body is upright. The cut-off line of the low-beam headlight is, for example, substantially horizontal when the vehicle body is upright. The cut-off line of the low-beam headlight is, for example, located below the horizontal line of the low-beam headlight when the vehicle body is upright.

The cut-off line of the sub headlight extends obliquely when the vehicle body is upright. For example, when the vehicle body is upright, the cut-off line of the sub headlight extends from the lower and inner side with respect to the width direction of the vehicle toward the upper and outer side with respect to the width direction of the vehicle. Desirably, the cut-off line of the sub headlight is substantially horizontal when the sub headlight is turned on in accordance with the lean angle (for example, when the lean angle reaches the reference value).

Here, in the present teaching, the optical axis is a straight line that passes through a light source and the center of a maximum illuminance portion of emitted light. The center of the maximum illuminance portion of the emitted light can be identified by emitting light from a light source to a screen that is placed ahead of the light source. This screen illuminance test can be implemented by a method specified in JIS D1619. Also, the cut-off line and the illumination range having the predetermined illuminance can be identified based on a result (such as an isolux distribution map) of the screen illuminance test mentioned above. In the present teaching, the illumination range means an illumination range having a predetermined illuminance, and this illuminance is not particularly limited. The cut-off line and the illumination range having the predetermined illuminance in a plan view can be identified based on a road-surface light distribution that is obtained by converting the result of the screen illuminance test mentioned above into the road-surface light distribution. The conversion into the road-surface light distribution can be implemented by a conventionally known method. To be specific, through commonly-used drawing and geometric calculation, conversion from a screen illuminance value into a road-surface illuminance value can be performed. In such a case, the following expression (I) is usable. In the following expression (I), D represents a light source, E represents a point on a road surface, and F represents a point of intersection at which the screen placed between D and E intersects with a straight line connecting D to E.

$$\text{Road-Surface Illuminance (Lx)} = \text{Screen Illuminance (Lx)} \times [(\text{Distance between D and F (m)}) / (\text{Distance between D and E (m)})]^2 \qquad \dots \text{(I)}$$

As shown in the expression (I), the road surface illuminance is inversely proportional to the square of the distance between the light source and the road surface. Therefore, an area on the road surface distant from the motorcycle 10 is less easily brightened by the light emitted from the motorcycle 10. In order to brightly illuminate an area on the road surface distant from the motorcycle 10, it is preferable that a portion having a high screen illuminance is generated below and near the horizontal line. A region below and near the cut-off line (that is, an upper edge portion of the emitted light) is relatively bright. Accordingly, locating the cut-off line at a position below and near the horizontal line can produce a portion having a high screen illuminance at a position below and near the horizontal line. This can ensure the visibility over a road surface at a long distance. Locating the cut-off line at a position above the horizontal line causes a problem of dazzling. Thus, by accurately adjusting the cut-off line, the visibility over a road surface at a long distance can be ensured with suppression of dazzling.

In this embodiment, for example, the light emitted from the sub headlight 130L is adjusted based on the cut-off line $L_0$ of the low-beam headlight 110 as a reference. The cut-off line $L_0$ is a bright-dark limit, and a contrast between bright and dark becomes high at the cut-off line $L_0$ as a boundary. Therefore, using the cut-off line $L_0$ as a reference enables the light emitted from the sub headlight 130L to be adjusted accurately and easily. Moreover, adjustment based on the cut-off line $L_0$ as a reference contributes to accurate adjustment of the cut-off line $L_0$ itself. Accordingly, the visibility over a road surface at a long distance can be ensured, and additionally dazzling can be suppressed.

Next, a change in a screen light distribution of the headlight in accordance with the lean angle of the motorcycle 10 will be described with reference to FIGS. 6(a) to (c).

When the lean angle of the motorcycle 10 reaches the reference value $K_1$, the sub headlight 130La is turned on. As shown in FIG. 6(a), the illumination ranges LB and $LS_1$ are inclined downward to the left. The cut-off line $LL_1$ of

the sub headlight 130La is located below a horizontal line $HL_1$ of the sub headlight 130La (a horizontal line passing through the sub LED light source 131La). The cut-off line $LL_1$ is substantially horizontal. The illumination range $LS_1$ of the sub headlight 130La is located in a space below the horizontal line $HL_1$.

Then, when the lean angle of the motorcycle 10 reaches the reference value $K_2$, the sub headlight 130Lb is turned on under a state where the sub headlight 130La is turned on. As shown in FIG. 6(b), the illumination ranges LB, $LS_1$, and $LS_2$ are inclined downward to the left. The cut-off line $LL_2$ of the sub headlight 130Lb is located below a horizontal line $HL_2$ of the sub headlight 130Lb (a horizontal line passing through the sub LED light source 131Lb). The cut-off line $LL_2$ is substantially horizontal. The illumination range $LS_2$ of the sub headlight 130Lb is located in a space below the horizontal line $HL_2$.

Then, when the lean angle of the motorcycle 10 reaches the reference value $K_3$, the sub headlight 130Lc is turned on under a state where the sub headlights 130La and 130Lb are turned on. As shown in FIG. 6(c), the illumination ranges LB, $LS_1$ to $LS_3$ are inclined downward to the left. The cut-off line $LL_3$ of the sub headlight 130Lc is located below a horizontal line $HL_3$ of the sub headlight 130Lc (a horizontal line passing through the sub LED light source 131Lc). The cut-off line $LL_3$ is substantially horizontal. The illumination range $LS_3$ of the sub headlight 130Lc is located in a space below the horizontal line $HL_3$.

As shown in FIGS. 6(a) to (c), when the sub headlight 130 is turned on in accordance with the lean angle, the illumination range LS of the sub headlight 130 newly appears. The illumination range LS of the sub headlight 130 has the cut-off line LL, and the brightness largely changes at the cut-off line LL as a boundary. Thus, dazzling to an oncoming vehicle or the like may occur if the cut-off line LL is located above the horizontal line when the sub headlight 130 is turned on.

In this respect, in the light unit disclosed in JP 4864562, it is not easy to satisfy a demanded accuracy of the relative positional relationship between cut-off lines. Therefore, for the reliable prevention of dazzling, the distance between a horizontal line of a sub headlight at a time when the sub headlight is turned on and the cut-off line located below the horizontal line needs to be increased taking into account a dimensional error that may occur during a manufacturing process. However, if the cut-off line LL is located considerably below the horizontal line when the sub headlight is turned on, the visibility over a road surface at a long distance decreases. That is, JP 4864562 aims to achieve both suppression of dazzling to an oncoming vehicle or the like and suppression of decrease in the visibility over the road surface at a long distance while the vehicle is running on a curve, but achievement of both of them is difficult taking into account a manufacturing error.

In the light unit 100, on the other hand, the sub headlight 130 can be turned on for fine adjustment of the cut-off line LL of light emitted from the sub headlight 130 under a state where the light unit 100 is fixed when the vehicle is stopped (for example, FIGS. 7, 8). In the light unit 100, therefore, a lowered accuracy is demanded in manufacturing. This can provide the light unit 100 that is easy to manufacture and that achieves both suppression of dazzling to an oncoming vehicle or the like and suppression of decrease in the visibility over a road surface at a long distance even while the motorcycle 10 is running on a curve. Additionally, since suppression of decrease in the visibility over a road surface at a long distance is achieved with suppression of dazzling to an oncoming vehicle or the like, a light source having a higher brightness (a light source having a higher output) is adoptable as the light source.

Next, a method for adjusting the light unit 100 will be described with reference to FIGS. 7 and 8. When an adjustment method shown in FIGS. 7 and 8 is performed, the motorcycle 10 is in a stopped state, but the sub headlight 130 can be turned on by the sub headlight turn-on device for a vehicle's stopped state mentioned above. Adjustment of emitted light in FIGS. 7 and 8 is performed by the cut-off line moving device 140.

FIGS. 7(a) to (e) are diagrams each schematically showing a screen light distribution obtained when an adjustment method according to an embodiment is performed.

In the light unit 100, the low-beam headlight 110 and the sub headlights 130L (130La to 130Lc) are integrally provided (see FIG. 2). Thus, the illumination ranges LB, $LS_1$ to $LS_3$ and the cut-off lines $L_0$, $LL_1$ to $LL_3$ are integrally moved. The high-beam headlight 120 and the sub headlights 130R (130Ra to 130Rc) are integrally provided (see FIG. 2). Thus, the illumination ranges HB, $RS_1$ to $RS_3$ and the cut-off lines $RL_1$ to $RL_3$ are integrally moved.

In the adjustment method shown in FIG. 7, firstly, the lights 110, 120, and 130 are turned on while the motorcycle 10 that is stopped is brought into an upright state. Alternatively, the lights 110, 120, and 130 may be turned on after the motorcycle 10 is brought into the upright state. Alternatively, the motorcycle 10 may be brought into the upright state after the lights 110, 120, and 130 are turned on. The adjustment method shown in FIG. 7 is performed under a state where the motorcycle 10 that is stopped stands upright. Turning on the lights 110, 120, and 130 causes the illumination ranges LB, $LS_1$ to $LS_3$, HB, and $RS_1$ to $RS_3$ to appear (FIG. 7(a)). When the motorcycle 10 stands upright, the cut-off line $L_0$ of the illumination range LB is substantially parallel to the horizontal line H of the low-beam headlight 110.

Then, the light emitted from each of the sub headlights 130La to 130Lc, whose orientation changes along with a change in the orientation of the low-beam headlight 110, is adjusted based on the cut-off line $L_0$ of the light emitted from the low-beam headlight 110 as a reference (FIGS. 7(b) to (c)). This step corresponds to the first step.

In an example shown in FIG. 7, the position of the light emitted from each of the sub headlights 130La to 130Lc is adjusted with respect to the vertical direction (FIG. 7(b)), and then the position of the light emitted from each of the sub headlights 130La to 130Lc is adjusted with respect to the width direction of the vehicle (FIG. 7(c)). The order of these adjustments is not particularly limited. The adjustment with respect to the width direction may precede the adjustment with respect to the vertical direction of the vehicle. The adjustment with respect to the vertical direction and the adjustment with respect to the width direction of the vehicle may be performed concurrently.

In FIG. 7(b), the position of the light emitted from each of the lights 110 and 130L is adjusted with respect to the vertical direction based on the cut-off line $L_0$ and the horizontal line H of the low-beam headlight 110 as a reference. For example, as indicated by the arrow in FIG. 7(b), the position of the light emitted from each of the lights 110 and 130L is adjusted with respect to the vertical direction such that the cut-off line $L_0$ is located below and near the horizontal line H.

In FIG. 7(c), the position of the light emitted from each of the lights 110 and 130L is adjusted with respect to the right-left direction. For example, the position of the light emitted from each of the lights 110 and 130L is adjusted with respect to the width direction of the vehicle such that a central portion (a portion located substantially at the center) of the cut-off line $L_0$ with respect to the width direction of the vehicle overlaps a vertical line V that passes through the center of the motorcycle 10 with respect to the width direction of the vehicle. Alternatively, the position of the light emitted from each of the lights 110 and 130L may be adjusted with respect to the width direction of the vehicle such that the distance between the vertical line V and the cut-off line $LL_1$ or the emitted light $LS_1$ with respect to the width direction of the vehicle satisfies a predetermined distance. A method for adjusting each of the lights 110 and 130L is not particularly limited, as long as the method is based at least on the cut-off line $L_0$ of the low-beam headlight 110 as a reference.

FIGS. 7(b) and 7(c) show an example of the step of adjusting the light emitted from the sub headlight 130 based on the cut-off line $L_0$ of the low-beam headlight 110 as a reference.

Through the step shown in FIGS. 7(b) and 7(c), the adjustment of the light emitted from each of the lights 110 and 130L is completed. Then, the light emitted from each of the lights 120 and 130R, whose orientation changes independently of the lights 110 and 130L, is adjusted based on the light emitted from each of the lights 110 and 130L as a reference (FIG. 7(d)). This step corresponds to the second step. For example, the position of each of the lights 120 and 130R is adjusted such that the cut-off lines $LL_1$ to $LL_3$ produced by the sub headlights 130L and the cut-off lines $RL_1$ to $RL_3$ of the sub headlights 130R are located laterally symmetrical with respect to the vertical line V. Alternatively, the position of each of the lights 120 and 130R may be adjusted such that the positional relationship between the illumination range HB of the high-beam headlight 120 and the cut-off line $L_0$ or illumination range LB of the light emitted from the low-beam headlight 110 satisfies a predetermined relationship. Through the above-described process, the adjustment of the lights 110, 120, and 130 is completed. A method for adjusting the lights 120 and 130R is not particularly limited, as long as the method is based on the light emitted from each of the lights 110 and 130L after the adjustment as a reference.

It may be also acceptable that, as shown in FIG. 7(e), the light emitted from each of the lights 110 and 130L is adjusted such that a point of intersection at which the cut-off line $L_0$ intersects with the cut-off line $LL_1$ overlaps the vertical line V while the light emitted from each of the lights 120 and 130R is adjusted such that a point of intersection at which the cut-off line $L_0$ intersects with the cut-off line $RL_1$ overlaps the vertical line V. Performing the adjustment based on a point of intersection between any of the cut-off lines $L_0$, $LL_1$ to $LL_3$, and $RL_1$ to $RL_3$ as a reference enables easy adjustment. The adjustment may be performed based on a portion where boundary lines of illumination ranges overlap each other as a reference. The boundary line of the illumination range includes a cut-off line. The portion where the boundary lines overlap each other includes a point of intersection. The adjustment based on the portion where the boundary lines of the illumination ranges overlap each other as a reference may be applied not only to the adjustment method shown in FIG. 7 but also to an adjustment method of the present teaching.

In the above-described adjustment method, the sub headlight 130L is adjusted based on the cut-off line $L_0$ of the light emitted from the low-beam headlight 110 as a reference, and the sub headlight 130R is adjusted based on the light emitted from the sub headlight 130L after the adjustment as a reference. This makes it relatively easy to finely adjust the light emitted from the sub headlight 130L and the sub headlight 130R. This configuration also enables the sub headlight 130L and the sub headlight 130R to be independently adjusted. Accordingly, a demand for the dimensional accuracy in manufacturing can be lowered.

In the method shown in FIG. 7, the illumination range LB and the cut-off line $L_0$ of the low-beam headlight 110, and the illumination ranges $LS_1$, $RS_1$ and the cut-off lines $LL_1$, $RL_1$ of the sub headlights 130La, 130Ra, which are illustrated with the solid lines in FIG. 7, are used as a reference. However, the present teaching is not limited to this example. It is preferable that the illumination range of a sub headlight whose orientation changes along with a change in the orientation of the low-beam headlight and the illumination range of another sub headlight whose orientation changes independently of the aforesaid sub headlight are substantially laterally symmetrical. In other words, it is preferable that the illumination range of at least one of the sub headlights configured to be adjusted in the first step and the illumination range of at least one of the sub headlights configured to be adjusted in the second step are substantially laterally symmetrical. Since the emitted light can be adjusted with use of the laterally symmetric properties of the illumination range, the adjustment is easier.

Next, another adjustment method will be described.

FIGS. 8(a) to (i) are diagrams each schematically showing a screen light distribution obtained when an adjustment method according to another embodiment is performed.

Firstly, adjustment of each of the lights 110 and 130L will be described. In the adjustment method shown in FIG. 8, firstly, the lights 110, 120, and 130 are turned on while the motorcycle 10 that is stopped is brought into an upright state (FIG. 8(a)). Alternatively, the lights 110, 120, and 130 may be turned on after the motorcycle 10 is brought into the upright state. Alternatively, the motorcycle 10 may be brought into the upright state after the lights 110, 120, and 130 are turned on.

Then, the position of the light emitted from the sub headlight 130L, whose orientation changes along with a change in the orientation of the low-beam headlight 110, is adjusted with respect to the vertical direction based on the cut-off line $L_0$ of the light emitted from the low-beam headlight 110 as a reference (FIG. 8(b)). This step corresponds to the vertical adjustment step. FIG. 8(b) shows an example of the step of adjusting the light emitted from the sub headlight 130 based on the cut-off line $L_0$ of the low-beam headlight 110 as a reference.

Then, the motorcycle 10 is inclined to one side with respect to the width direction of the vehicle until the cut-off line $LL_3$ of the light emitted from the sub headlight 130Lc becomes substantially horizontal (FIG. 8(c)). In this state, the horizontal line $HL_3$ of the sub headlight 130Lc (the horizontal line passing through the sub LED light source 131Lc) and the cut-off line $LL_3$ of the sub headlight 130Lc are substantially parallel. A line H shown in FIG. 8 is identical to the horizontal line H obtained when the motorcycle 10 is upright, and the line H indicates the horizontal line H having been moved along with inclination of the motorcycle 10.

Then, under the state shown in FIG. 8(c), the position of the light emitted from the sub headlight 130L, whose orientation changes along with a change in the orientation of the low-beam headlight 110, is adjusted with respect to the width direction of the vehicle based on the cut-off line $LL_3$ and the horizontal line $HL_3$ as a reference. For example, as indicated by the arrow in FIG. 8(d), the illumination ranges LB, $LS_1$ to $LS_3$ are moved along the line H such that the cut-off line $LL_3$ is located below and near the horizontal line $HL_3$. FIG. 8(d) corresponds to the widthwise adjustment step. Through the process shown in FIGS. 8(a) to (d), the adjustment of the lights 110 and 130L is completed.

Next, adjustment of each of the lights 120 and 130R will be described. The lights 110, 120, and 130 are turned on while the motorcycle 10 that is stopped is brought into an upright state (FIG. 8(e)). Under this state, the illumination ranges HB, $RS_1$ to $RS_3$ are moved in the width direction of the vehicle such that a top $HB_0$ of the illumination range HB of the high-beam headlight 120 overlaps the vertical line V (FIG. 8(f)). Instead of the top $HB_0$, the optical axis of the high-beam headlight 120 (not shown) may be used. That is, adjustment can be performed by using a characteristic point (such as the top or the optical axis) located substantially at the center of the light emitted from the high-beam headlight 120 with respect to the width direction of the vehicle.

Then, the motorcycle 10 is inclined to one side with respect to the width direction of the vehicle until the cut-off line $RL_3$ of the light emitted from the sub headlight 130Rc becomes substantially horizontal (FIG. 8(g)). In this state, the horizontal line $HR_3$ (the horizontal line passing through the sub LED light source 131Rc) of the sub headlight 130Rc and the cut-off line $RL_3$ of the sub headlight 130Rc are substantially parallel. A line V in FIG. 8 is identical to the vertical line obtained when the motorcycle 10 is upright, and the line V indicates the vertical line having been moved along with inclination of the motorcycle 10.

Then, under the state shown in FIG. 8(h), the position of the light emitted from the sub headlight 130R, whose orientation changes along with a change in the orientation of the high-beam headlight 120, is adjusted with respect to the vertical direction based on the cut-off line $RL_3$ and the horizontal line $HR_3$ as a reference. For example, as indicated by the arrow in FIG. 8(h), the illumination ranges HB, $RS_1$ to $RS_3$ are moved along the line V such that the cut-off line $RL_3$ is located below and near the horizontal line $HR_3$. Through the process shown in FIGS. 8(e) to (h), the adjustment of the lights 120 and 130R is completed. FIG. 8(i) shows the illumination ranges LB, HB, $LS_1$ to $LS_3$, and $RS_1$ to $RS_3$ produced by the light emitted from the lights 110, 120, and 130 after the adjustment.

In the adjustment method of the above-described embodiment, the light emitted from the sub headlight 130 obtained when the vehicle body is actually inclined is used. Therefore, the accuracy of the adjustment can be increased. The adjustment methods shown in FIGS. 7 and 8 may be performed on the light unit 100 or on the motorcycle 10 (vehicle that leans into turns). In a case of performing the methods on the light unit 100, the adjustment methods are implemented under a state where the cover 101 (fixed part) is fixed in a predetermined position. The adjustment shown in FIGS. 7 and 8 may not necessarily be performed under a state where all of the lights 110, 120, and 130 are constantly turned on. In a possible example, the adjustment may be performed with switching of the light to be turned on in such a manner that only the light whose cut-off line (or the emitted light) is to be moved is turned on. It may be acceptable that the steps of FIGS. 8(a) to (d) are performed after the steps of FIGS. 8(e) to (h) are performed. In a case where the low-beam headlight is of two lamp type in which one low-beam headlight is integrated with part of the sub headlights and the other low-beam headlight is integrated with the rest of the sub headlights, it may be possible that the steps of FIGS. 8(a) to (d) are performed twice based on each of the low-beam headlights as a reference.

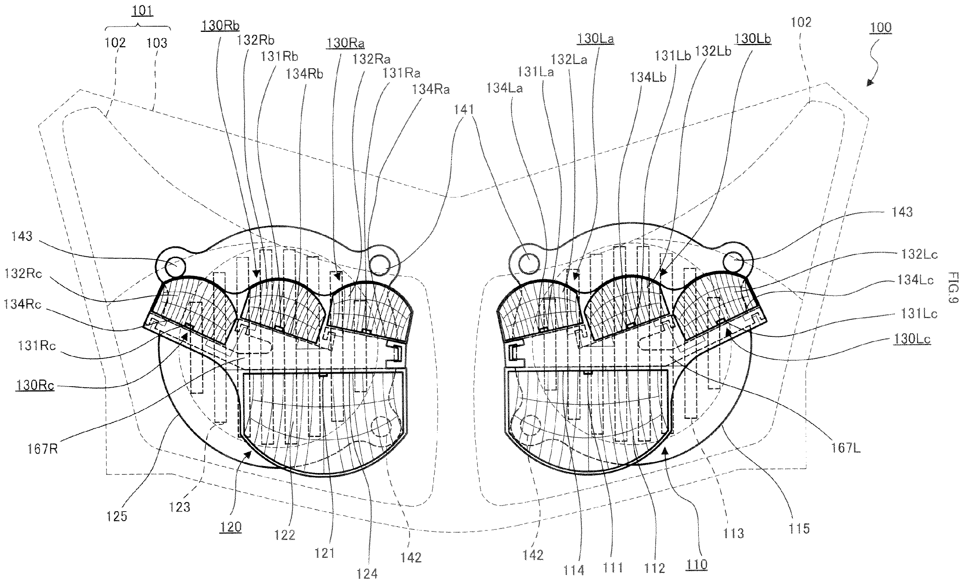

Next, second to sixth embodiments will be described with reference to FIGS. 9 to 13. In FIGS. 9 to 13, parts corresponding to the parts shown in FIGS. 1 to 3 are given the same reference numerals as those given on FIGS. 1 to 3.

<Second Embodiment>

FIG. 9 is a front elevational view schematically showing a light unit 100 according to a second embodiment.

In the light unit 100 shown in FIG. 9, similarly to the first embodiment, the low-beam headlight 110 is integrated with the sub headlights 130L arranged at one side (left side) with respect to the width direction of the vehicle, and the high-beam headlight 120 is integrated with the sub headlights 130R arranged at one side (right side) with respect to the width direction of the vehicle.

In the light unit 100 shown in FIG. 9, the sub headlights 130L are aligned in the width direction of the vehicle at a location above the low-beam headlight 110. The sub headlights 130La to 130Lc are arranged in this order from the inner side with respect to the width direction of the vehicle. In accordance with an increase in the lean angle, the sub headlights 130La to 130Lc are turned on sequentially from the sub headlight arranged innermost with respect to the width direction of the vehicle. The sub headlights 130R and the sub headlights 130L are laterally symmetrical.

The lights 110 and 120 are arranged such that the light sources 111 and 121 are located on lower surfaces of the substrates 114 and 124, respectively. The sub headlights 130 are arranged such that the sub LED light sources 131 are located on upper surfaces of the sub LED substrates 134. Thus, in the lights 110 and 130L, a support member 167L for supporting both of the substrates 114 and 134L is provided between the substrates 114 and 134L. In the lights 120 and 130R, a support member 167R for supporting both of the substrates 124 and 134R is provided between the substrates 124 and 134R.

The position set points 141 to 143 are provided on each of the low-beam heat dissipation plate 115 and the high-beam heat dissipation plate 125. The reference point 141 provided on the low-beam heat dissipation plate 115 is closest to the sub headlight 130La. The widthwise movement point 143 provided on the low-beam heat dissipation plate 115 is closest to the sub headlight 130Lc. A straight line (not shown) connecting the reference point 141 to the vertical movement point 142 and a straight line (not shown) connecting the reference point 141 to the widthwise movement point 143 overlap the low-beam heat sink 113.

<Third Embodiment>

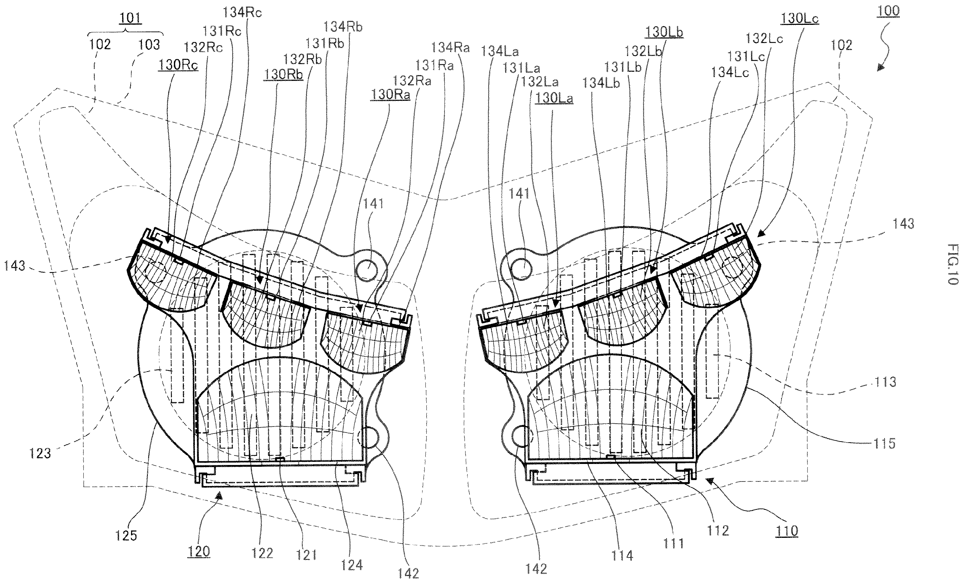

FIG. 10 is a front elevational view schematically showing a light unit 100 according to a third embodiment.

In the light unit 100 shown in FIG. 10, similarly to the first and second embodiments, the low-beam headlight 110 is integrated with the sub headlight 130L arranged at one side (left side) with respect to the width direction of the vehicle, and the high-beam headlight 120 is integrated with the sub headlights 130R arranged at one side (right side) with respect to the width direction of the vehicle.

In the light unit 100 shown in FIG. 10, the sub headlights 130L (130La to 130Lc) are located above the low-beam headlight 110 and arranged in this order toward the upper and outer side with respect to the width direction of the vehicle. In accordance with an increase in the lean angle, the sub headlights 130La to 130Lc are turned on sequentially from the sub headlight arranged lowermost and innermost with respect to the width direction of the vehicle. The sub headlights 130R and the sub headlights 130L are laterally symmetrical.

The lights 110 and 120 are arranged such that the light sources 111 and 121 are located on upper surfaces of the substrates 114 and 124, respectively. The sub headlights 130 are arranged such that the sub LED light sources 131 are located on lower surfaces of the sub LED substrates 134. Thus, in the lights 110 and 130L, the reflectors 112 and 132L are formed as a single member. In the lights 120 and 130R, the reflectors 112 and 132R are formed as a single member.

The position set points 141 to 143 are provided on each of the low-beam heat dissipation plate 115 and the high-beam heat dissipation plate 125. The reference point 141 provided on the low-beam heat dissipation plate 115 is closest to the sub headlight 130La. The widthwise movement point 143 provided on the low-beam heat dissipation plate 115 is closest to the sub headlight 130Lc. A straight line (not shown) connecting the reference point 141 to the vertical movement point 142 and a straight line (not shown) connecting the reference point 141 to the widthwise movement point 143 overlap the low-beam heat sink 113.

<Fourth Embodiment>

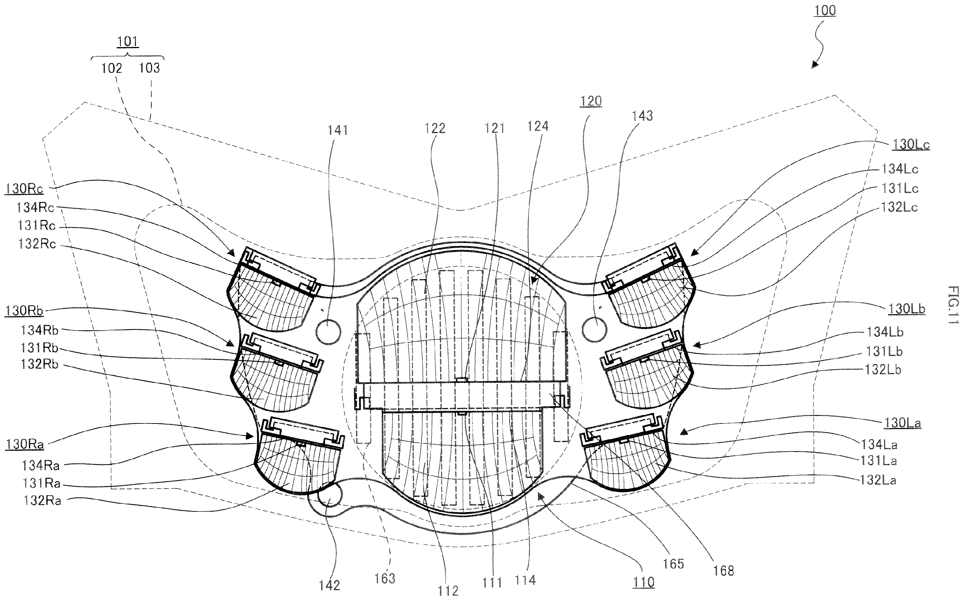

FIG. 11 is a front elevational view schematically showing a light unit 100 according to a fourth embodiment.

In the light unit 100 shown in FIG. 11, the outer cover 102 is shaped so as to extend across opposite sides with respect to the width direction of the vehicle. In the light unit 100, the low-beam headlight 110 and the high-beam headlight 120 have a main heat sink 163. The main heat sink 163 serves also as heat sinks of the sub headlights 130. The main heat sink 163 is integrated with the sub reflectors 132.

The substrates 114, 124, 134 having the light sources 111, 121, 131 of the lights 110, 120, 130, and the reflectors 112, 122, 132, are arranged on a front surface of a main heat dissipation plate 165. The main heat sinks 163 are arranged on a back surface of the main heat dissipation plate 165.

The sub headlights 130L, which are aligned in the vertical direction, are arranged at one side (left side) with respect to the width direction of the vehicle. The sub headlight 130R, which are aligned in the vertical direction, are arranged at one side (right side) with respect to the width direction of the vehicle. In accordance with an increase in the lean angle, the sub headlights 130L are turned on sequentially from the sub headlight arranged lowermost. The low-beam headlight 110 and the high-beam headlight 120 are arranged between the sub headlights 130L and the sub headlights 130R.

The light 110 is arranged such that the light source 111 is located on a lower surface of the substrate 114. The light 120 is arranged such that the light source 121 is located on an upper surface of the substrate 124. Thus, a support member 168 for supporting both of the substrates 114 and 124 is provided between the substrate 114 and the substrate 124.

With respect to the width direction of the vehicle, the reference point 141 and the vertical movement point 142 are provided between the main headlight (the low-beam headlight 110 and the high-beam headlight 120) and the sub headlights 130R arranged at one side (right side) with respect to the width direction of the vehicle. The reference point 141 and the vertical movement point 142 line up in the vertical direction. With respect to the width direction of the vehicle, the widthwise movement point 143 is provided between the main headlight (the low-beam headlight 110 and the high-beam headlight 120) and the sub headlights 130L arranged at one side (left side) with respect to the width direction of the vehicle. The reference point 141 and the widthwise movement point 143 line up in the width direction of the vehicle.

The position set points 141 to 143 are provided on the main heat dissipation plate 165. The vertical movement point 142 is closest to the sub headlight 130Ra. The widthwise movement point 143 is closest to the sub headlight 130Lc. A straight line (not shown) connecting the reference point 141 to the widthwise movement point 143 overlaps the main heat sink 163.

<Fifth Embodiment>

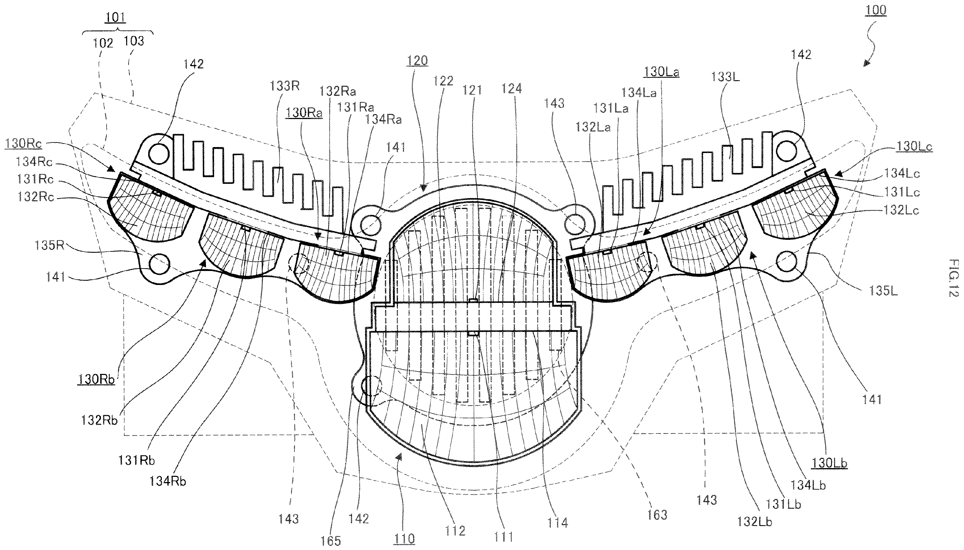

FIG. 12 is a front elevational view schematically showing a light unit 100 according to a fifth embodiment.

In the light unit 100 shown in FIG. 12, the outer cover 102 is shaped so as to extend across opposite sides with respect to the width direction of the vehicle. In the light unit 100, the low-beam headlight 110 and the high-beam headlight 120 have a main heat sink 163. The substrates 114, 124 having the light sources 111, 121 of the lights 110, 120, and the reflectors 112, 122, are arranged on a front surface of the main heat dissipation plate 165. The main heat sink 163 is arranged on a back surface of the main heat dissipation plate 165. The main heat sink 163 is exposed to the outside of the cover 101 (see FIG. 3).

The sub headlights 130L, the sub headlights 130R, and the main headlight (the low-beam headlight 110 and the high-beam headlight 120) are separate from one another within the cover 101.

The sub headlights 130L (130La to 130Lc) are located outside the main headlight with respect to the width direction of the vehicle and arranged in this order toward the upper and outer side with respect to the width direction of the vehicle. A sub heat dissipation plate 135L is a member separate from the main heat dissipation plate 165 and a sub heat dissipation plate 135R which will be described later. A sub heat sink 133L is arranged above the sub LED light sources 131La to 131Lc. A sub heat sink 133L is located within the cover 101. The sub headlights 130R and the sub headlights 130L are laterally symmetrical.

The position set points 141 to 143 are provided on each of the main headlight (the low-beam headlight 110 and the high-beam headlight 120), the sub headlights 130L, and the sub headlights 130R. More specifically, the position set points 141 to 143 is provided on each of the main heat dissipation plate 165, the sub heat dissipation plate 135L, and the sub heat dissipation plate 135R.

<Sixth Embodiment>

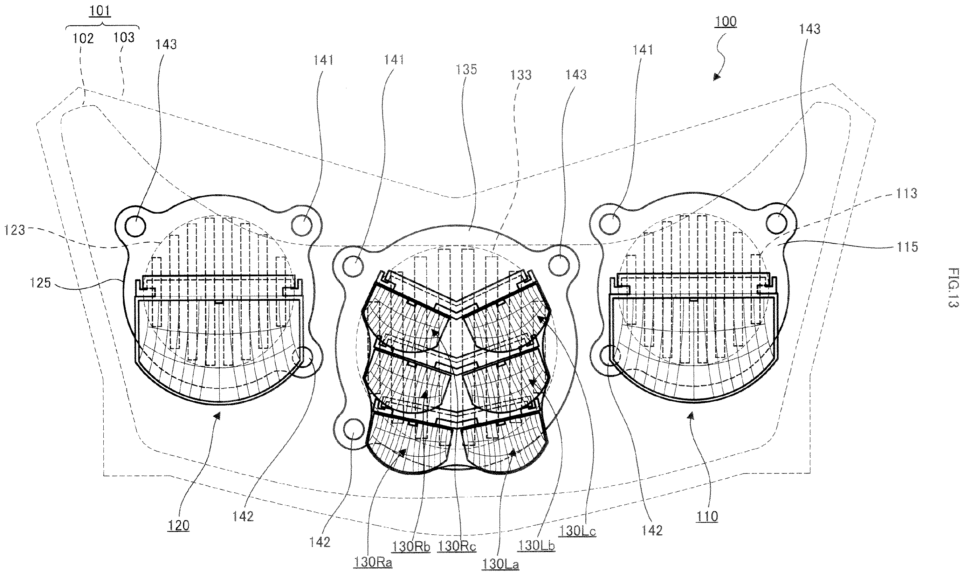

FIG. 13 is a front elevational view schematically showing a light unit 100 according to a sixth embodiment.

In the light unit 100 shown in FIG. 13, the outer cover 102 is shaped so as to extend across opposite sides with respect to the width direction of the vehicle. In the light unit 100, the low-beam headlight 110 serving as a main headlight is arranged at one side (left side) with respect to the width direction of the vehicle, and the high-beam headlight 120 serving as a main headlight is arranged at the other side (right side) with respect to the width direction of the vehicle. The sub headlights 130 (130L and 130R) are arranged between the main headlights (between the low-beam headlight 110 and the high-beam headlight 120) with respect to the width direction of the vehicle.

That is, the sub headlights 130L and 130R, the low-beam headlight 110, and the high-beam headlight 120 are separate from one another within the cover 101. A plurality of sub headlights 130L and 130R each illuminating each side with respect to the width direction of the vehicle are integrally provided.

The sub headlights 130L, which are aligned in the vertical direction, are arranged at one side (left side) with respect to the width direction of the vehicle. In accordance with an increase in the lean angle, the sub headlights 130L are turned on sequentially from the sub headlight arranged lowermost. The sub headlights 130R and the sub headlights 130L are laterally symmetrical. The sub headlights 130L and 130R are arranged on a front surface of the single sub heat dissipation plate 135. The sub heat sink 133 is arranged on a back surface of the sub heat dissipation plate 135. The low-beam headlight 110 is arranged on a front surface of the low-beam heat dissipation plate 115. The low-beam heat sink 113 is arranged on a back surface of the low-beam heat dissipation plate 115. The high-beam headlight 120 is arranged on a front surface of the high-beam heat dissipation plate 125. The high-beam heat sink 123 is arranged on a back surface of the high-beam heat dissipation plate 125.

The position set points 141 to 143 are provided on each of the low-beam headlight 110, the high-beam headlight 120, and the sub headlights 130L and 130R. More specifically, the position set points 141 to 143 are provided on each of the heat dissipation plates 115, 125, and 135. The heat sinks 113, 123, and 133 are exposed to the outside of the cover 101 (see FIG. 3).

Although the first to sixth embodiments have been described, the present teaching is not limited to these embodiments. In another possible example, the low-beam headlight 110 and the high-beam headlight 120 serving as the main headlight may be integrated while a plurality of sub headlights 130 may be integrated and provided separately from the low-beam headlight 110 and the high-beam headlight 120. It is not indispensable that the light unit 100 includes the main headlight (the low-beam headlight 110 and the high-beam headlight 120), but it is preferable that the light unit 100 includes the main headlight.

In the second and third embodiments, similarly to the first embodiment, the low-beam headlight 110 is integrated with the sub headlights 130L arranged at one side (left side) with respect to the width direction of the vehicle, and the high-beam headlight 120 is integrated with the sub headlights 130R arranged at one side (right side) with respect to the width direction of the vehicle. Accordingly, in the second and third embodiments as well as the first embodiment, the adjustment method shown in FIG. 7 or 8 can be implemented.

In the fourth embodiment, the lights 110, 120, and 130 are integrated. This enables the high-beam headlight 120 and the sub headlights 130 to be adjusted together with the low-beam headlight 110 based at least on the cut-off line $L_0$ of the light emitted from the low-beam headlight 110 as a reference.

In the fifth embodiment, the low-beam headlight 110 and the high-beam headlight 120 are integrated, the sub headlights 130La to 130Lc are integrated, and the sub headlights 130Ra to 130Rc are integrated. Accordingly, the low-beam headlight 110 and the high-beam headlight 120 can be adjusted based at least on the cut-off line $L_0$ of the light emitted from the low-beam headlight 110 as a reference, and the sub headlights 130La to 130Lc can be adjusted based on the light emitted from the low-beam headlight 110 and the high-beam headlight 120 after the adjustment as a reference, and additionally the sub headlights 130Ra to 130Rc can be adjusted.

in the sixth embodiment, the plurality of sub headlights 130L and 130R are integrated, and the sub headlights 130L and 130R, the low-beam headlight 110, and the high-beam headlight 120 are provided independently of one another. Accordingly, the light emitted from the low-beam headlight 110 and the light emitted from the high-beam headlight 120 can be adjusted based on the cut-off line $L_0$ of the light emitted from the low-beam headlight 110 as a reference, and additionally the sub headlights 130L and 130R can be adjusted.

As thus far described, in the first to sixth embodiments, fine adjustment of the light emitted from the sub headlight 130 can be easily performed based on the cut-off line $L_0$ of the light emitted from the low-beam headlight 110 as a reference. Here, adjusting the light emitted from the sub headlight 130 based on the cut-off line $L_0$ as a reference includes: in a case where the low-beam headlight 110 and the sub headlight 130 are separate members, moving the light emitted from the sub headlight 130 such that the positional relationship between the cut-off line $L_0$ and the light emitted from the sub headlight 130 after the adjustment satisfies a predetermined condition; and in a case where the low-beam headlight 110 and the sub headlight 130 are integrated, moving the light emitted from the sub headlight 130 together with the cut-off line $L_0$ such that the positional relationship between the cut-off line $L_0$ and a predetermined object (for example, a horizontal line) satisfies a predetermined condition.

In the light unit of the present teaching, it may not be always necessary that all the lights are integrated. In a possible example, the main headlight (the low-beam headlight and/or the high-beam headlight) and the sub headlight arranged at one side with respect to the width direction of the vehicle are integrated into a unit while the main headlight (the low-beam headlight and/or the high-beam headlight) and the sub headlight arranged at the other side with respect to the width direction of the vehicle are integrated into a unit.

It may not be always necessary that the light unit includes all of the main headlight and the sub headlights provided in a single vehicle that leans into turns. In the present teaching, each of the low-beam headlight and the high-beam headlight may be of single lamp type or of multiple lamp type (for example, two lamp type). It may be acceptable that the light unit includes a light other than the main headlight and the sub headlight (for example, a flasher (direction indicator) or a position light (side lamp)).

In these embodiments, the lean angle is the angle of inclination of the vehicle body to the inner side of a curve relative to the upright state (vertical direction). However, the present teaching is not limited to this example. The lean angle may be the angle of inclination of the vehicle body to the inner side of a curve relative to a direction perpendicular to a road surface. As a method and a device for measuring the angle of inclination of the vehicle body to the inner side of a curve relative to the direction perpendicular to the road surface, conventionally known ones are adoptable.

In the present teaching, no particular limitation is put on the number of sub headlights. The number of sub headlights configured to illuminate one side with respect to the width direction of the vehicle may be one, or may be two or more. The number of light sources included in a single sub headlight may be one, or may be two or more. A reflector may be provided around the light source. A lens may be provided ahead of the light source. The light source may be provided with both the reflector and the lens.

In the present teaching, the sub headlight may be configured such that a turn-on function in accordance with the lean angle is activated or deactivated by hand. To be specific, the function may be put into a stand-by state by hand, and under the stand-by state, the sub headlight may be turned on in accordance with the lean angle. In this case as well, the sub headlight is turned on not by hand but in accordance with the lean angle. Instead, the sub headlight may be configured such that an instruction for turn-on or turn-off is inputted by hand. In such a case, when the instruction is not inputted, the brightness of the sub headlight is changed in accordance with the lean angle, while when the instruction is inputted, turn-on or turn-off is performed in accordance with the instruction. In this case as well, the sub headlight has a function of being turned on in accordance with the lean angle. The sub headlight may be configured such that it is not turned on in accordance with the lean angle in a relatively well-lit situation, for example, in daytime, while it is turned on in accordance with the lean angle in a relatively dark situation, for example, at night. In either case, the sub headlight is different from the main headlight and the flasher, in that the sub headlight has a function of being turned on in accordance with the lean angle.

The present teaching can adopt the following configurations. The above-described embodiments are merely examples of the present teaching.

(A) The light unit according to any one of (1) to (4) described above, wherein
the cut-off line moving device is configured to, when the vehicle is stopped, move the cut-off line of the light emitted from the sub headlight under a state where the sub headlight is turned on and the fixed part is fixed to the vehicle body, such that the cut-off line of the light emitted from the sub headlight obtained at a time point when the sub headlight is turned on in accordance with the lean angle of the vehicle is brought close to a predefined target position. The target position may be, for example, a position below and near a horizontal line, or may be a position on the horizontal line.
In the configuration of (A), suppression of dazzling to an oncoming vehicle or the like and suppression of decrease in the visibility over a road surface at a long distance are achieved at a higher level.
(B) The light unit according to any one of (1) to (4) described above, wherein
the light unit includes a low-beam headlight, the low-beam headlight being supported on a vehicle body that is allowed to lean while the vehicle is running, the low-beam headlight being configured to be turned on irrespective of the lean angle of the vehicle,
the low-beam headlight includes a low-beam headlight light source, the low-beam headlight being configured to produce a cut-off line at the upper side of light emitted from the low-beam headlight light source, the cut-off line extending in a width direction of the vehicle when the vehicle body is upright,
the cut-off line moving device is configured to, when the vehicle is stopped, move the cut-off line of the light emitted from the low-beam headlight together with the cut-off line of the light emitted from the sub headlight under a state where the sub headlight is turned on and the fixed part is fixed to the vehicle body.
In the configuration of (B), the cut-off line of the light emitted from the sub headlight can be adjusted based on the cut-off line of the low-beam headlight as a reference. This enables the cut-off line of the light emitted from the sub headlight to be adjusted accurately and easily.
(C) The light unit according to (B) described above, wherein
the cut-off line moving device is configured to, when the vehicle has such an attitude that the cut-off line of the light emitted from the low-beam headlight extends substantially in the horizontal direction (for example, when the vehicle is upright), move the cut-off line of the light emitted from the low-beam headlight together with the cut-off line of the light emitted from the sub headlight under a state where the sub headlight is turned on and the fixed part is fixed to the vehicle body.
The configuration of (C) is able to adjust the cut-off line of the light emitted from the sub headlight while adjusting the positional relationship between the cut-off line of the low-beam headlight and the horizontal line. This enables the cut-off line to be adjusted more accurately and easily.
(D) The light unit according to any one of (1) to (4) described above, wherein
the cut-off line moving device is configured to, when the vehicle is stopped, simultaneously move a plurality of cut-off lines having different inclination angles produced by a plurality of the sub headlights under a state where the plurality of the sub headlights are turned on and fixed to the vehicle body.

The configuration of (D) is able to adjust the cut-off line of each of the sub headlights in an efficient manner.

(E) The light unit according to any one of (1) to (4) described above, wherein

the cut-off line moving device is configured to move, on a screen light distribution, the cut-off line of the light emitted from the sub headlight in a vertical direction or a width direction of the vehicle.

(F) The light unit according to (B) described above, wherein

the cut-off line moving device is configured to move the cut-off line of the light emitted from the low-beam headlight toward a predefined reference position to thereby bring the cut-off line of the light emitted from the sub headlight close to a predefined target position.

The reference position may be, for example, a position below and near a horizontal line. The target position is as described in the (A) above.

The configuration of (F) is able to adjust the cut-off lines of the low-beam headlight and the sub headlight in an efficient manner.

[DESCRIPTION OF THE REFERENCE SIGNS]

10 motorcycle (vehicle that leans into turns)
14L, 14R flasher
15 operation switch
16 front wheel
17 front fork
18 front cover
19 handlebar
22 lean angle sensor
23 vehicle speed sensor
30 stay
100 light unit

101 cover (fixed part)
102 outer cover
103 rear cover
104 attachment part
105 rubber boot part

110 low-beam headlight (main headlight)

111 low-beam LED light source (main LED light source)
112 low-beam reflector
113 low-beam heat sink (main heat sink)
114 low-beam LED substrate
115 low-beam heat dissipation plate
116 low beam transparent surface

120 high-beam headlight (main headlight)

121 high-beam LED light source (main LED light source)
122 high-beam reflector
123 high-beam heat sink (main heat sink)
124 high-beam LED substrate
125 high-beam heat dissipation plate
126 high beam transparent surface

130 (130La to 130Lc, 130Ra to 130Rc) sub headlight

131 (131La to 131Lc, 131Ra to 131Rc) sub LED light source
132 (132La to 132Lc, 132Ra to 132Rc) sub reflector

134 (134La to 134Lc, 134Ra to 134Rc) sub LED substrate
136 (136La to 136Lc, 136Ra to 136Rc) sub transparent surface

140 cut-off line moving device

141 reference point (position set point)
141a boss portion
141b threaded shaft
141c ball portion
141d ball bearing portion

142 vertical movement point (position set point)

142a aiming bolt
142b aiming nut

143 widthwise movement point (position set point)
150 controller
151 harness
152 coupler
163 main heat sink
165 main heat dissipation plate
167 (167L, 167R) support member
180 diagnostic tool box

**Claims**

1. Vehicle (10) with a light unit (100), the vehicle (10) can lean into turns while the vehicle (10) is running, the light unit (100) comprising:

   a fixed part (101) fixed to a vehicle body,
   a main headlight (110, 120) supported on the vehicle body, wherein the main headlight (110, 120) can be turned on irrespective of the lean angle of the vehicle (10) while the vehicle (10) is running; and
   a sub headlight (130) provided in the fixed part (101) and including a sub headlight light source (131), the sub headlight (130) can produce a cut-off line at the upper side of light emitted from the sub headlight light source (131), the cut-off line extending obliquely when the vehicle body is upright, wherein the sub headlight (130) is turned on in accordance with an increase in a lean angle of the vehicle (10) while the vehicle (10) is running;
   **characterized by**
   a sub headlight turn-on device (150) for a vehicle's stopped state for turning on the sub headlight (130) under a state where the main headlight (110, 120) is turned on when the vehicle (10) is stopped, and
   a sub-headlight cut-off line moving device (140) for, when the vehicle (10) is stopped moving the cut-off line of the light emitted from the sub headlight (130) under a state where the sub headlight (130) is turned on and the fixed part (101) is fixed to the vehicle body.

2. Vehicle (10) with a light unit (100) according to claim 1, wherein the main headlight (110, 120) includes a low-beam headlight (110), the low-beam headlight (110) including a low-beam headlight light source (111), the low-beam headlight (110) can produce a cut-off line at the upper side of light emitted from the low-beam headlight light source (111), the cut-off line extending in a width direction of the vehicle (10) when the vehicle body is upright.

3. Vehicle (10) with a light unit (100) according to claim 1 or 2, wherein the main headlight (110, 120) includes a high-beam headlight (120), the high-beam headlight (120) being configured such that light emitted from the high-beam headlight (120) when the vehicle body is upright is narrower than light emitted from the sub headlight (130) with respect to a width direction of the vehicle (10).

4. A light unit adjustment method for adjusting the light unit (100) in a vehicle according to claim 2, the adjustment method including the step of adjusting the light emitted from the sub headlight (130L) whose orientation changes together with the low-beam headlight (110) based on the cut-off line ($L_0$) of the light emitted from the low-beam headlight (110) as a reference.

5. A light unit (100) adjustment method according to claim 4, including:

a first step in which light emitted from the sub headlight (130L) whose orientation changes together with the low-beam headlight (110) is adjusted based on the cut-off line ($L_0$) of the light emitted from the low-beam headlight (110) as a reference, the first step being performed on the light unit (100) when the vehicle (10) is upright; and

a second step in which light emitted from a sub headlight (130R) whose orientation changes independently of the sub headlight (130L) having been adjusted in the first step is adjusted based on the light emitted from the sub headlight (130L) having been adjusted in the first step as a reference, the second step being performed on the light unit (100) when the vehicle (10) is upright.

6. A light unit (100) adjustment method according to claim 4, including:

a vertical adjustment step in which the position of light emitted from the sub headlight (130L) whose orientation changes together with the low-beam headlight (110) is adjusted with respect to the vertical direction based on the cut-off line ($L_0$) of the light emitted from the low-beam headlight (110) as a reference, the vertical adjustment step being performed on the light unit (100) when the vehicle (10) is upright; and

a widthwise adjustment step in which, under a state where the light unit (100) is inclined such that the cut-off line ($LL_3$) of the light emitted from the sub headlight (130L) becomes substantially horizontal, the position of the light emitted from the sub headlight (130L) whose orientation changes together with the low-beam headlight (110) is adjusted with respect to the width direction of the vehicle (10) based on the cut-off line (LL3) of the light emitted from the sub headlight (130L) as a reference.

7. A method for adjusting a vehicle (10) that leans into turns, wherein the adjustment method is performed according to any one of claims 4 to 6 on a light unit (100) provided in the vehicle (10).

**Patentansprüche**

1. Fahrzeug (10) mit einer Lichteinheit (100), wobei sich das Fahrzeug (10) in Kurven neigen kann, während das Fahrzeug (10) fährt, wobei die Lichteinheit (100) umfasst:

einen fixierten Teil (101), der an einer Fahrzeugkarosserie fixiert ist,
einen Hauptscheinwerfer (110, 120), der an der Fahrzeugkarosserie gehalten wird, wobei der Hauptscheinwerfer (110, 120) unabhängig von dem Neigungswinkel des Fahrzeugs (10) geneigt werden kann, während das Fahrzeug (10) fährt, und
einen Nebenscheinwerfer (130), der in dem fixierten Teil (101) vorgesehen ist und eine Nebenscheinwerfer-Lichtquelle (131) aufweist, wobei der Nebenscheinwerfer (130) eine Hell-Dunkel-Grenze an der oberen Seite des von der Nebenscheinwerfer-Lichtquelle (131) emittierten Lichts erzeugen kann, wobei sich die Hell-Dunkel-Grenze schräg erstreckt, wenn die Fahrzeugkarosserie aufrecht ist, wobei der Nebenscheinwerfer (130) bei einer Vergrößerung des Neigungswinkels des Fahrzeugs (10) eingeschaltet wird,
während das Fahrzeug (10) fährt,
**gekennzeichnet durch:**

eine Nebenscheinwerfer-Einschalteinrichtung (150) für einen gestoppten Zustand des Fahrzeugs zum Einschalten des Nebenscheinwerfers (130) in einem Zustand, in dem der Hauptscheinwerfer (110, 120) eingeschaltet ist und das Fahrzeug (10) gestoppt ist, und
eine Nebenscheinwerfer-Hell-Dunkel-Grenze-Verschiebungseinrichtung (140) zum, wenn das Fahrzeug (10) gestoppt ist, Verschieben der Hell-Dunkel-Grenze des von dem Nebenscheinwerfer (130) emittierten Lichts in einem Zustand, in dem der Nebenscheinwerfer (130) eingeschaltet ist und der fixierte Teil (101) an der Fahrzeugkarosserie fixiert ist.

2. Fahrzeug (10) mit einer Lichteinheit (100) nach Anspruch 1, wobei der Hauptscheinwerfer (110, 120) einen Abblendlicht-Scheinwerfer (110) umfasst, wobei der Abblendlicht-Scheinwerfer (110) eine Abblendlicht-Scheinwerfer-Lichtquelle (111) enthält, wobei der Abblendlicht-Scheinwerfer (110) eine Hell-Dunkel-Grenze an der oberen Seite des von der Abblendlicht-Scheinwerfer-Lichtquelle (111) emittierten Lichts erzeugen kann, wobei sich die Hell-Dunkel-Grenze in einer Breitenrichtung des Fahrzeugs (10) erstreckt, wenn die Fahrzeugkarosserie aufrecht ist.

3. Fahrzeug (10) mit einer Lichteinheit (100) nach Anspruch 1 oder 2, wobei der Hauptscheinwerfer (110, 120) einen Fernlicht-Scheinwerfer (120) umfasst, wobei der Fernlicht-Scheinwerfer (120) derart konfiguriert ist, dass von dem Fernlicht-Scheinwerfer (120) emittiertes Licht, wenn die Fahrzeugkarosserie aufrecht ist, schmäler ist als von dem Nebenscheinwerfer (130) emittiertes Licht in Bezug auf die Breitenrichtung des Fahrzeugs (10).

4. Lichteinheit-Einstellverfahren zum Einstellen der Lichteinheit (100) in einem Fahrzeug gemäß dem Anspruch 2, wobei das Einstellverfahren einen Schritt zum Einstellen des von dem Nebenscheinwerfer (130L), dessen Ausrichtung sich zusammen mit dem Abblendlicht-Scheinwerfer (110) ändert, emittierten Lichts basierend auf der Hell-Dunkel-Grenze ($L_0$) des von dem Abblendlicht-Scheinwerfer (110) emittierten Lichts als einem Bezug umfasst.

5. Lichteinheit (100)-Einstellverfahren nach Anspruch 4, das umfasst:

einen ersten Schritt, in dem von dem Nebenscheinwerfer (130L), dessen Ausrichtung sich zusammen mit dem Abblendlicht-Scheinwerfer (110) ändert, emittiertes Licht basierend auf der Hell-Dunkel-Grenze ($L_0$) des von dem Abblendlicht-Scheinwerfer (110) emittierten Lichts als einem Bezug eingestellt wird, wobei der erste Schritt an der Lichteinheit (100) durchgeführt wird, wenn das Fahrzeug (10) aufrecht ist, und
einen zweiten Schritt, in dem von einem Nebenscheinwerfer (130R), dessen Ausrichtung sich unabhängig von dem in dem ersten Schritt eingestellten Nebenscheinwerfer (130L) ändert, emittiertes Licht basierend auf dem von dem in dem ersten Schritt eingestellten Nebenscheinwerfer (130L) emittierten Licht als einem Bezug eingestellt wird, wobei der zweite Schritt an der Lichteinheit (100) durchgeführt wird, wenn das Fahrzeug (10) aufrecht ist.

6. Lichteinheit (100)-Einstellverfahren nach Anspruch 4, das umfasst:

einen vertikalen Einstellschritt, in dem die Position des von dem Nebenscheinwerfer (130L), dessen Ausrichtung sich zusammen mit dem Abblendlicht-Scheinwerfer (110) ändert, emittierten Lichts in Bezug auf die vertikale Richtung basierend auf der Hell-Dunkel-Grenze ($L_0$) des von dem Abblendlicht-Scheinwerfer (110) emittierten Lichts als einem Bezug eingestellt wird, wobei der vertikale Einstellschritt an der Lichteinheit (100) durchgeführt wird, wenn das Fahrzeug (10) aufrecht ist, und
einen Breitenposition-Einstellschritt, in dem in einem Zustand, in dem die Lichteinheit (100) derart geneigt ist, dass die Hell-Dunkel-Grenze ($LL_3$) des von dem Nebenscheinwerfer (130L) emittierten Lichts im Wesentlichen horizontal wird, die Position des von dem Nebenscheinwerfer (130L), dessen Ausrichtung sich zusammen mit dem Abblendlicht-Scheinwerfer (110) ändert, emittierten Lichts in Bezug auf die Breitenrichtung des Fahrzeugs (10) basierend auf der Hell-Dunkel-Grenze ($LL_3$) des von dem Nebenscheinwerfer (130L) emittierten Lichts als einem Bezug eingestellt wird.

7. Verfahren zum Einstellen eines Fahrzeugs (10), das sich in Kurven neigt, wobei das Einstellverfahren gemäß einem der Ansprüche 4 bis 6 an einer in dem Fahrzeug (10) vorgesehenen Lichteinheit (100) durchgeführt wird.


**Revendications**

1. Véhicule (10) ayant une unité d'éclairage (100), le véhicule (10) peut se pencher dans des virages lorsque le véhicule (10) se déplace, l'unité d'éclairage (100) comprenant :

une partie fixe (101) fixée à une carrosserie de véhicule,
un phare principal (110, 120) supporté sur la carrosserie de véhicule, le phare principal (110, 120) pouvant être allumé quel que soit l'angle d'inclinaison du véhicule (10) lorsque le véhicule (10) se déplace ; et
un phare secondaire (130) agencé dans la partie fixe (101) et comprenant une source de lumière de phare secondaire (131), le phare secondaire (130) peut produire une ligne de coupure au niveau du côté supérieur de la lumière émise par la source de lumière de phare secondaire (131), la ligne de coupure s'étendant obliquement lorsque la carrosserie de véhicule est en position verticale, le phare secondaire (130) étant allumé en fonction d'une augmentation d'un angle d'inclinaison du véhicule (10) lorsque le véhicule (10) se déplace ;
**caractérisé par**
un dispositif d'allumage de phare secondaire (150) pour un état d'arrêt du véhicule afin d'allumer le phare secondaire (130) dans un état dans lequel le phare principal (110, 120) est allumé lorsque le véhicule (10) est arrêté, et

un dispositif de déplacement de ligne de coupure de phare secondaire (140) pour, lorsque le véhicule (10) est arrêté, déplacer la ligne de coupure de la lumière émise par le phare secondaire (130) dans un état dans lequel le phare secondaire (130) est allumé et la partie fixe (101) est fixée à la carrosserie de véhicule.

2. Véhicule (10) ayant une unité d'éclairage (100) selon la revendication 1, dans lequel le phare principal (110, 120) comprend un phare de feu de croisement (110), le phare de feu de croisement (110) comprenant une source de lumière de phare de feu de croisement (111), le phare de feu de croisement (110) peut produire une ligne de coupure au niveau du côté supérieur de la lumière émise par la source de lumière de phare de feu de croisement (111), la ligne de coupure s'étendant dans une direction de largeur du véhicule (10) lorsque la carrosserie de véhicule est en position verticale.

3. Véhicule (10) ayant une unité d'éclairage (100) selon la revendication 1 ou 2, dans lequel le phare principal (110, 120) comprend un phare de feu de route (120), le phare de feu de route (120) étant configuré de sorte que la lumière émise par le phare de feu de route (120) lorsque la carrosserie de véhicule est en position verticale est plus étroite que la lumière émise par le phare secondaire (130) par rapport à une direction de largeur du véhicule (10).

4. Procédé d'ajustement d'unité d'éclairage pour ajuster l'unité d'éclairage (100) dans un véhicule selon la revendication 2, le procédé d'ajustement comprenant l'étape d'ajustement de la lumière émise par le phare secondaire (130L) dont l'orientation change ensemble avec le phare de feu de croisement (110) sur la base de la ligne de coupure ($L_0$) de la lumière émise par le phare de feu de croisement (110) en tant que référence.

5. Procédé d'ajustement d'unité d'éclairage (100) selon la revendication 4, comprenant :

une première étape dans laquelle la lumière émise par le phare secondaire (130L) dont l'orientation change ensemble avec le phare de feu de croisement (110) est ajustée sur la base de la ligne de coupure ($L_0$) de la lumière émise par le phare de feu de croisement (110) en tant que référence, la première étape étant effectuée sur l'unité d'éclairage (100) lorsque le véhicule (10) est en position verticale ; et

une seconde étape dans laquelle la lumière émise par un phare secondaire (130R) dont l'orientation change indépendamment du phare secondaire (130L) ayant été ajusté lors de la première étape est ajustée sur la base de la lumière émise par le phare secondaire (130L) ayant été ajustée lors de la première étape en tant que référence, la seconde étape étant effectuée sur l'unité d'éclairage (100) lorsque le véhicule (10) est en position verticale.

6. Procédé d'ajustement d'unité d'éclairage (100) selon la revendication 4, comprenant :

une étape d'ajustement vertical dans laquelle la position de la lumière émise par le phare secondaire (130L) dont l'orientation change ensemble le phare de feu de croisement (110) est ajustée par rapport à la direction verticale sur la base de la ligne de coupure ($L_0$) de la lumière émise par le phare de feu de croisement (110) en tant que référence, l'étape d'ajustement vertical étant effectuée sur l'unité d'éclairage (100) lorsque le véhicule (10) est en position verticale ; et

une étape d'ajustement en largeur dans laquelle, dans un état où l'unité d'éclairage (100) est inclinée de sorte que la ligne de coupure ($LL_3$) de la lumière émise par le phare secondaire (130L) devient sensiblement horizontale, la position de la lumière émise par le phare secondaire (130L) dont l'orientation change ensemble avec le phare de feu de croisement (110) est ajustée par rapport à la direction de largeur du véhicule (10) sur la base de la ligne de coupure (LL3) de la lumière émise par le phare secondaire (130L) en tant que référence.

7. Procédé d'ajustement d'un véhicule (10) qui se penche dans des virages, dans lequel le procédé d'ajustement est effectué selon l'une quelconque des revendications 4 à 6 sur une unité d'éclairage (100) agencée dans le véhicule (10).

FIG.1

FIG.2

FIG.3

FIG.4

FIG.5

FIG.6

(a)

(b)

(c)

FIG.7

FIG.8

EP 2 792 585 B1

FIG.9

34

FIG.10

EP 2 792 585 B1

FIG.11

FIG.12

FIG.13

**EP 2 792 585 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4864562 B
- EP 2489549 A1
- WO 2010061651 A1